# EUROPEAN PATENT APPLICATION

(11) **EP 1 560 122 A1**
(43) Date of publication of application: **03.08.2005**
(21) Application number: 03797645.3
(22) Date of filing: 18.09.2003
(51) Int. Cl.: G06F 13/00

(54) **INFORMATION ACQUIRING DEVICE AND INFORMATION PROVIDING DEVICE**

(30) Priority: 18.09.2002 JP 2002271114
(71) Applicant: MATSUSHITA ELECTRIC INDUSTRIAL CO., LTD., Kadoma-shi, Osaka 571-8501 (JP)
(72) Inventor: TAKATORI, Masahiro, Toyonaka-shi, Osaka 560-0021 (JP); KATAOKA, Mitsuteru, Katano-shi, Osaka 576-0034 (JP)
(74) Representative: Gassner, Wolfgang, Dr.
(86) International application number: PCT/JP2003/011867
(87) International publication number: WO 2004/027627

(57) **Abstract**

An information acquiring device and an information providing device used for a pull-type data distribution service is connected to an e-mail server and an information server on a network to receive an e-mail from the e-mail server through the network to acquire data, analyzes the data of the acquired received mail, acquires a definition file and contents in the information server to causes the contents to be displayed in a format defined by the definition file and, when it is recognized that the location information is present in the data of the received mail acquired through analysis , stores the recognized location information on the network for use in acquiring the definition file and the contents.

## Description

### TECHNICAL FIELD

The present invention relates to digital television broadcast receivers, personal computers, cellular phones, and portable information terminals which are connected to an e-mail server or an information server on a network, such as the Internet, to receive e-mails and also acquire information, such as homepages, or which receive broadcast signals and also have a function of transmitting e-mails.

### BACKGROUND ART

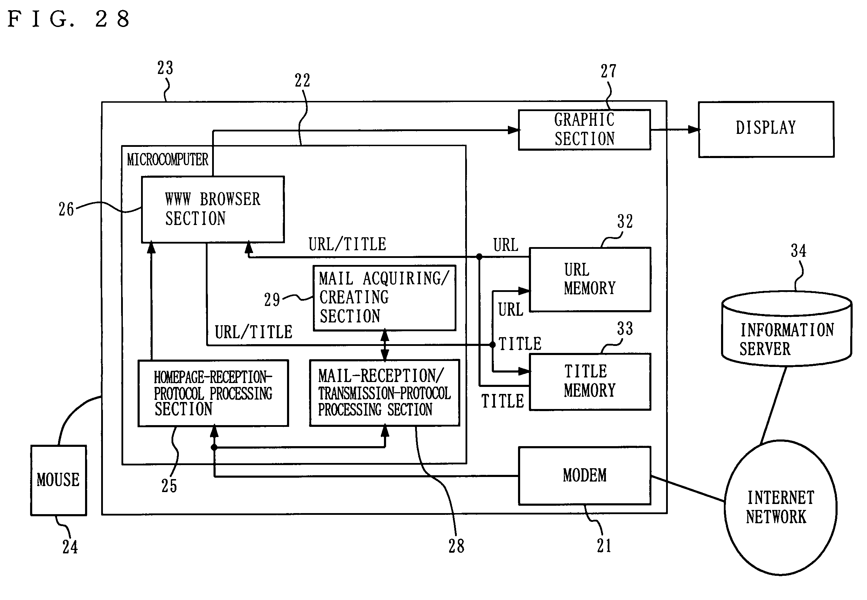

As exemplarily suggested in Japanese Patent Laid-Open Publication No. 2002-56028, it has been conventionally known that a bookmark is downloaded to a portable information terminal for use. In the following, a conventional information acquiring and providing device is described. FIG. 28 is a block diagram showing a conventional information acquiring and providing device.

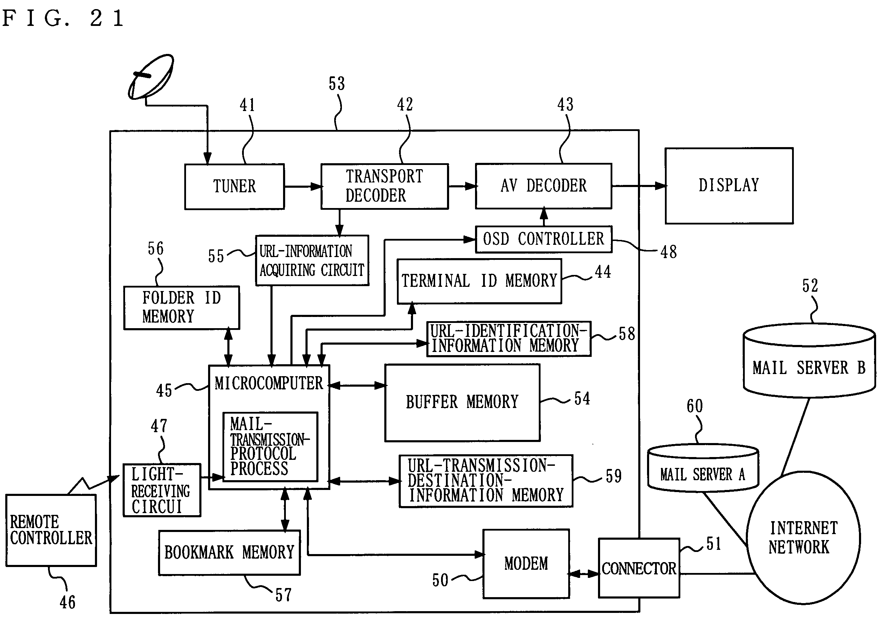

As shown FIG. 28, 21 denotes a modem connected to the Internet network via a communication line of a communication company or a service provider not shown for receiving data through the communication line under the control of a microcomputer 22, which will be described further below, for demodulation and output, and for modulating transmission data for output to the communication line.

The modem 21 is not restricted to a so-called modem using a telephone line, but may be any communication terminal, such as an ADSL modem using a telephone line, an ONU of FTTH using an optical fiber network, or a cable modem using a cable television line. A connecting scheme is not restricted to a dial-up connecting scheme, but may be a constant connecting scheme. 22 denotes the microcomputer for controlling each component of an information acquiring device 23 and also achieving a homepage protocol process and a WWW browser function, which will be described further below, through a software program. 24 denotes a so-called mouse, which is a user interface of the information acquiring device 23 and has right and left keys, a movement information acquiring means for pointing, etc.

The microcomputer 22 receives data output from the mouse 24 to interpret the instruction from the user. 25 denotes a homepage-reception-protocol processing section, which is a portion for performing a process regarding a communication protocol, such as TCP/IP and HTTP, for homepage-related data communication through the modem 21. 26 denotes a WWW browser section, which is software for performing a process similar to that of an Internet explorer on a personal computer. The WWW browser section receives an input of an individual piece of data output from the homepage-reception-protocol processing section 25, such as an image file and a text file, for appropriate decoding in accordance with the attribute of the file, and also reproduces a homepage by assembling contents obtained through decoding in accordance with the details of the received HTML file for conversion to pixel data. The WWW browser section further interprets the HTML file to acquire the URL and title of the homepage.

The reproduced homepage is rendered with pixel data on a display plane of a graphic section 27, and is then output as video data. The graphic section 27 also performs a scaling process, such as enlarging or reducing a display size of the rendered data upon instruction from the microcomputer 22. The graphic section 27 is normally connected to a memory for pixel conversion and the scaling process, but is not directly related to the conventional embodiment, and therefore is omitted herein. 28 denotes a mail-reception/transmission-protocol processing section for receiving an input of e-mail-related data received by the modem 21 to perform a process regarding a protocol, such as TCP/IP or POP, for output, and performing a process regarding a protocol, such as SMTP, on the input e-mail data for transmission from the modem 21.

29 denotes a mail receiving/creating section for receiving an input of data output from the mail-reception-protocol processing section 8 to extract data of the received mail and for creating and outputting e-mail data on which URL information IURL, which will be described further below, dragged and copied by using the mouse 24 is pasted. 33 denotes a title memory for storing titles bookmarked by the user. The title memory allows a title of the currently-viewed homepage displayed through the WWW browser section to be written under the control of the microcomputer 22. When the user uses the mouse 24 to issue an instruction for displaying a list of user-bookmarked titles (hereinafter also referred to as a bookmark list), the titles written under the control of the microcomputer 22 are read and displayed as a list by using the graphic section 27.

32 denotes a URL memory for storing a URL bookmarked by the user. The URL of the currently-viewed homepage displayed through the WWW browser section can be written under the control of the microcomputer 22. The titles written in the title memory 33 and the URLs written in the URL memory 32 of the same homepage are associated with each other, which will be described further below in detail. When the user selects a title of a homepage to be viewed from the above-described bookmark list, the associated URL is read under the control of the microcomputer 22 and, by making a connection to a relevant information server 34 with the use of the WWW browser section 26, the homepage-reception-protocol section 25 and the modem 31, the file specified by the read URL is received.

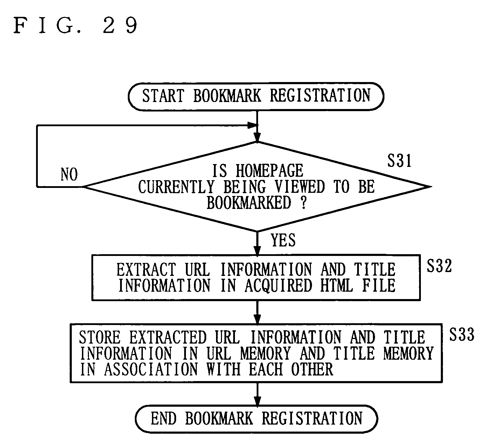

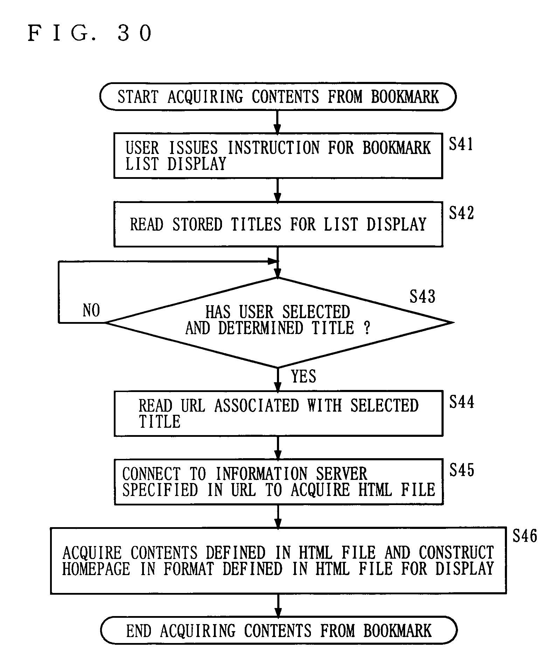

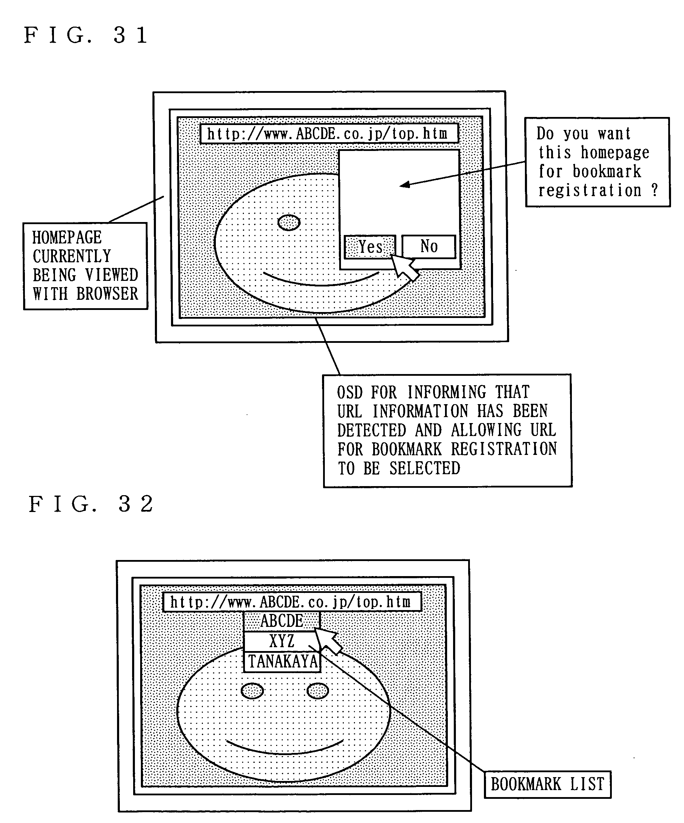

Next, the operation is described by using FIGS. 29 and 30. FIGS. 29 and 30 are operation flowcharts in the conventional embodiment. In FIG. 29, it is assumed that the user is viewing a specific homepage with the WWW browser. When the user wants to bookmark the homepage, the user performs an operation for bookmark registration by using the mouse 24 (step S31). The operation may be performed in accordance with an OSD on a screen. FIG. 31 is an illustration showing a display for confirming bookmark registration in the conventional embodiment. In FIG. 31, for bookmark registration of a homepage currently being viewed, an OSD for confirmation is displayed.

In FIG. 29, the microcomputer 22 then interprets the instruction, and then extracts the URL and title of the homepage from the HTML file acquired by the WWW browser section 26 (step S32). Next, under the control of the microcomputer 22, the extracted URL is stored in the URL memory 32, and the extracted title is stored in the title memory 33 (step S33). At this time, the title and the URL are stored in association with each other. This association can be achieved by retaining storage addresses in an area that is provided to a separate memory not shown and is previously associated through a program, or by correlating addresses retained in the memory in advance.

With the above operation, the user can achieve bookmark registration of the homepage currently being viewed with the WWW browser.

Next, the operation of displaying the bookmark list for viewing a homepage is described by using FIG. 30. FIG. 30 is the operation flowchart in the conventional embodiment. In FIG. 30, when the user uses the mouse 24 to issue an instruction for displaying a bookmark list (step S41), under the control of the microcomputer 22, the titles stored in the title memory 33 are read for a list display by using the graphics section 27, and then a selection by the user is waited (step S42).

An example of a bookmark list display is described by using FIG. 32. FIG. 32 is an illustration showing a bookmark list display in the conventional embodiment. As can been seen from FIG. 32, three registered homepage titles are displayed as a list. Each title on the list is on a button which can be selected and pressed by using the mouse 24. With this, the user can select and determine a title by using the mouse 24.

In FIG. 30, upon selection and determination of the title by the user (step S43), under the control of the microcomputer 22, a URL associated with the selected title is read from the URL memory 32 (step S44). Next, the microcomputer 22 uses the read URL to connect the relevant information server 34 by using the WWW browser section 26, the homepage-reception-protocol section 25, and the modem 21, and then receives an HTML file of the contents specified by the read URL (step S45).

Next**,** the microcomputer 22 interprets the HTML file, and then uses the WWW browser section 26, the homepage-reception-protocol section 25, and the modem 21 to acquire an individual piece of defined data, such as an image file or a text file, for appropriately decoding in accordance with the attribute of the file. Also, the contents decoded in accordance with the details of the HTML file similarly received are assembled for reproducing the homepage, and conversion to pixel data is performed for display by using the graphics section 27. Also, the HTML file is interpreted for acquiring the URL and title of the homepage (step S46). In this manner, the registered homepages can be displayed and maintained with the bookmark list.

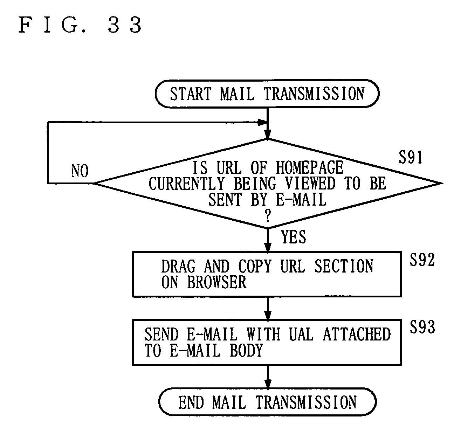

Next, the operation for transmitting, through an e-mail, the URL of the homepage currently being viewed is described by using FIG. 33. FIG. 33 is an operation flowchart in the conventional embodiment. When the URL of the homepage being viewed is pasted on an e-mail for transmission (step S91), the URL in a URL field on the browser for viewing or the URL on a browser screen is dragged and copied by using the mouse 24 (step S92). For example, http://WWW.ABCDE.CO.JP/top.com shown in FIG. 31 is dragged and copied. Next, by using the mail creating section 29, an editor for the body of the e-mail is started for pasting the copied URL for transmission by using the mail transmitting section 28 and the modem 21 (step S93).

### DISCLOSURE OF THE INVENTION

However, with the above-described structure, in order to bookmark a homepage, the user has to perform an operation of connecting to the information server to acquire URL information from the HTML file. As such, automatic bookmark registration by acquiring the URL from the received e-mail is not possible. Therefore, even if a terminal has acquired URL information, another terminal away therefrom cannot bookmark that information.

Also, for bookmarking, it is required to manually perform an operation of copying the URL contained in the received mail to paste the URL for bookmarking. To do this, a pointing device, such as a mouse, for specifying a range of a character string is required. Such an operation cannot be performed with a device only with keys, such as a remote controller for television receivers.

Furthermore, a business model for receiving payment by introducing a URL via e-mail cannot be constructed.

Still further, it is not possible to receive the URL information IURL transmitted via a broadcast signal and then transmit an e-mail containing the URL information. Therefore, bookmarking cannot be made to a location away from the receiver terminal, or to another terminal. Moreover, without using a storage area of the receiving terminal, information indicated by the URL cannot be viewed and listened later by the receiver terminal or another terminal.

Still further, it is required to manually perform an operation of copying the URL displayed on the e-mail with the use of the browser and pasting the URL for bookmarking. To do this, a pointing device, such as a mouse, for specifying a range of a character string is required. Therefore, such an operation cannot be performed with a device only with keys , such as a remote controller for television. Moreover, a business model for receiving payment by introducing a URL via e-mail cannot be constructed.

Still further, in the above-described scheme, an operation of the user copying the URL displayed with the use of the browser can be performed only when the user has some time to spare. Therefore, the conventional technology has a problem unique to pull-type data distribution in which, even if a URL indicating information that would be preferred by the user is broadcasted, the user cannot notice and obtain that information. In this sense, it is extremely desirable that push-type data distribution be applied restrictively to acquisition of a desired URL from a broadcast signal, which is distributed through pull-type data distribution.

An object of the present invention to provide an information acquiring device and an information providing device for solving the above conventional problems.

The present invention is characterized by comprising: communication means which is connected to an e-mail server and an information server on a network; e-mail reception protocol processing means for receiving an e-mail; mail receiving means which receives, from the e-mail server, an e-mail transmitted by another terminal on the network by using the e-mail reception protocol processing means and acquires data; analyzing means which analyzes the data of the acquired received mail; information reception protocol means for receiving information in the information server; browser means which acquires a definition file and contents in the information server and displays the contents in a format defined by the definition file; a location memory which stores information about locations on the network that are used for the browser means to acquire the definition file and the contents; and control means for control such that, when the location information is present in the data of the received mail acquired through the analysis of the analyzing means, the recognized location information is stored in the location memory.

As described above, in the information acquiring device according to the present invention, in order to bookmark a homepage, the user does not have to perform an operation of connecting to the information server to acquire URL information from the HTML file. It is possible to acquire the URL from the received e-mail for automatic bookmarking. Therefore, it can be achieved that even a terminal away from a terminal acquiring the URL information can bookmark that information. Also, for bookmarking, an operation of copying the URL contained in the received mail and then pasting the URL for bookmarking does not have to be manually performed. The operation can be performed even with a device provided only with keys, such as a remote controller for television. Furthermore, a business model for receiving payment by introducing a URL via e-mail can be constructed.

Also, in the information providing device according to the present invention, URL information transmitted with a broadcast signal or the like can be bookmarked, and also an e-mail storing the URL information can be automatically created and then transmitted to a destination registered in advance. Therefore, bookmarking can be easily achieved at a location away from the terminal and at another terminal. Furthermore, instead of using a storage area of the terminal itself, a storage area of a mail server is used so as to achieve a later viewing of the information indicated by the URL by using the terminal itself or another terminal.

Also in e-mail transmission, an operation of copying a URL and then pasting the URL on the body does not have to be manually performed. The operation can be performed even with a device provided only with keys, such as a remote controller for television. Furthermore, a business model for receiving payment by introducing a URL via e-mail can be constructed.

Still further, by using the information providing device and the information acquiring device according to the present invention, the e-mail receiving side can authenticate the sender and perform control whether automatic registration is enabled, while the transmitting side can specify a bookmark storage folder at the receiving side. Furthermore, when the transmission terminal is the reception terminal itself, the e-mail having containing URL information I can be prevented from being received.

Still further, by using the information acquiring device and the information providing device according to the present invention, of the URL information included in broadcast signals, which are provided under a pull-type data distribution service, only information desired by the user is automatically acquired and the acquired URL is then provided to the user as part of an e-mail. With this, a convenience such as that given under a push-type data distribution service can be provided to the user. Still further, with the use of an e-mail as a means for providing a URL, the e-mail is stored on the mail server, even if the user is out or the like and cannot acquire the URL information. Therefore, the user does not have to pick up the provided URL on a real-time basis, and therefore can acquire the desired URL without time restrictions. Still further, as long as the environment satisfies e-mail availability, the location where the URL is acquired is also unrestricted.

### BRIEF DESCRIPTION OF THE DRAWINGS

FIG. 1 is a block diagram showing the configuration of a URL information storage system according to a first embodiment of the present invention.
FIG. 2 is an illustration for describing data association in a registered information memory in the URL information storage system shown in FIG. 1.
FIG. 3 is an illustration for describing data association in the registered information memory in the URL information storage system shown in FIG. 1.
FIG. 4 is an illustration for describing format information stored in a transmission-format-information memory 123 in the URL information storage system shown in FIG. 1.
FIG. 5 is a flowchart showing an operation of transmitting an e-mail including URL information in the URL information storage system shown in FIG. 1.
FIG. 6 is a flowchart showing operations of receiving an e-mail including URL information and bookmarking in the URL information storage system shown in FIG. 1.
FIG. 7 is an illustration for describing an on-screen message OSM displayed on a display in the URL information storage system shown in FIG. 1.
FIG. 8 is a flowchart showing details of a process at the time of receiving an e-mail shown in FIG. 6.
FIG. 9 is a flowchart showing operations of displaying a bookmark list for viewing a homepage in the URL information storage system shown in FIG. 1.
FIG. 10 is a block diagram in a second embodiment of the present invention.
FIG. 11 is a flowchart showing a first operation in the second embodiment of the present invention.
FIG. 12 is a flowchart showing a second operation in the second embodiment of the present invention.
FIG. 13 is an illustration showing an example of a data structure in the second embodiment of the present invention.
FIG. 14 is an illustration showing an example of first received-mail data.
FIG. 15 is an illustration showing an example of second received-mail data.
FIG. 16 is an illustration showing an example of third received-mail data.
FIG. 17 is an illustration showing an example of a third operation in the second embodiment of the present invention.
FIG. 18 is an illustration showing a fourth operation in the second embodiment of the present invention.
FIG. 19 is an illustration showing an example of fourth received-mail data in the second embodiment of the present invention.
FIG. 20 is an illustration showing an example of a bookmark list display in the second embodiment of the present invention.
FIG. 21 is a block diagram showing a third embodiment of the present invention.
FIG. 22 is an illustration showing an example of a data structure in the third embodiment of the present invention.
FIG. 23 is a flowchart showing a first operation in the third embodiment of the present invention.
FIG. 24 is a flowchart showing a second operation in the third embodiment of the present invention.
FIG. 25 is an illustration showing an example of a URL-information-handling check display in the third embodiment of the present invention.
FIG. 26 is an illustration showing an example of a URL-information transmission-destination check display in the third embodiment of the present invention.
FIG. 27 is an illustration showing an example of first transmission-mail data in the third embodiment of the present invention.
FIG. 28 is a block diagram of a conventional embodiment.
FIG. 29 is a flowchart showing a first operation in the conventional embodiment.
FIG. 30 is a flowchart showing a second operation in the conventional embodiment.
FIG. 31 is an illustration showing an example of a bookmark-registration confirmation display in the conventional embodiment.
FIG. 32 is an illustration showing an example of a bookmark list display in the conventional embodiment.
FIG. 33 is a flowchart showing a third operation in the conventional embodiment.

### BEST MODE FOR CARRYING OUT THE INVENTION

### (First Embodiment)

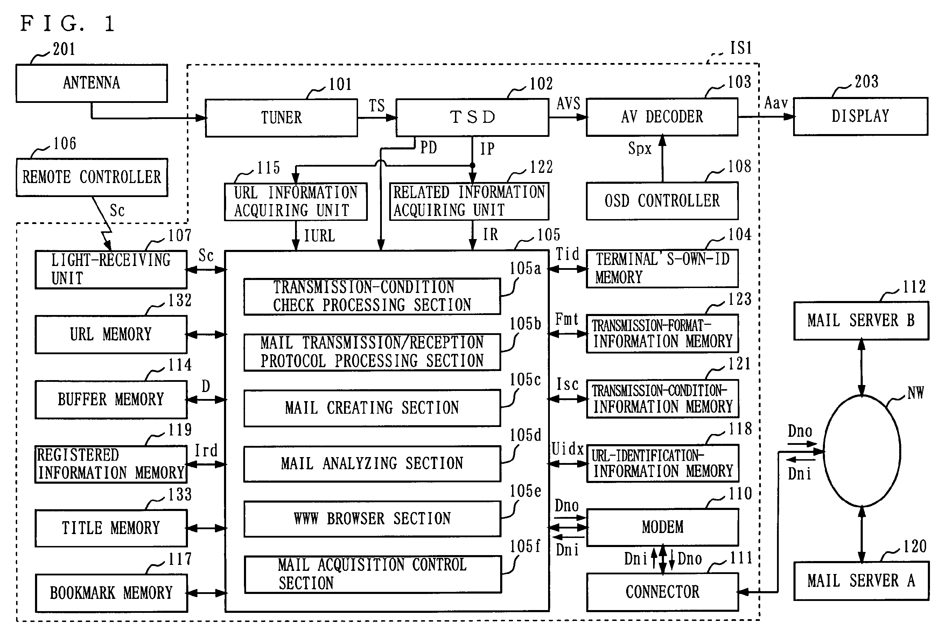

With reference to FIGS. 1, 2, 3, 4, 5, and 6, a URL information storage system according to a first embodiment of the present invention is described below. As shown in FIG. 1, a URL information storage system IS1 includes a tuner 101, a transport stream decoder (denoted as "TSD" in FIG. 1) 102, an AV decoder (denoted as "AVD" in FIG. 1) 103, a terminal's-own-ID memory 104, a microcomputer 105, a light-receiving unit 107, an OSD controller 108, a modem 110, a connector 111, a buffer memory 114, a bookmark memory 117, a URL-identification-information memory 118, a registered information memory 119, a transmission-condition-information memory 121, a transmission-format-information memory 123, and a title memory 133. The microcomputer 105 controls each component of the URL information storage system IS1. The above-configured URL information storage system IS1 can simultaneously satisfy the function of the information providing device and the function of the information acquiring device, which will be described further below in detail.

In the present embodiment, the URL information storage system IS1 is configured so as to be incorporated in a digital television receiver. That is, the URL information storage system IS1 depends on the digital television receiver for receiving a digital broadcast and performing processes before and after a process unique to the present invention. In this sense, in the Specification, of the operations of the URL information storage system IS1, those mainly using the functions of the digital television receiver are described as operations of the digital television receiver, if such a description is not particularly misleading.

After selecting a digital television broadcast channel received at the antenna 201, the tuner 101 outputs a demodulated transport stream TS. The transport stream decoder 102 decodes the transport stream TS output from the tuner 101, and then performs filtering on a video/audio stream AVS, a packet PD regarding data broadcast, and program list information IP of the program selected by the user for output.

In the present invention, it is assumed that the program list information IP, which is information regarding broadcast program and is included in a digital broadcast signal, has incorporated therein a URL of a homepage associated with each program. Broadcasting URLs in the program list information IP is technically easy, and is expected to be realized in the future. Also, filtering based on a packet ID (PID) described in a PAT packet or a PMT packet is a known technology in digital television.

A URL information IURL acquiring unit 115 and a related information IR acquiring unit 122 acquire URL information IURL and related information IR, respectively, from the program list information IP output from the transport stream decoder 102 for input to the microcomputer 105. The microcomputer 105 causes the related information IR to be stored in the buffer memory 114 in association with the URL information IURL.

The buffer memory 114 has stored therein packet data PD of a data broadcast after filtering performed by the transport decoder 102, the URL information IURL acquired by the URL information IURL acquiring unit 115, the related information IR acquired by the related information IR acquiring unit 122, and digital data D including data of a homepage acquired from an external information server (not shown).

The AV decoder 103 decodes a video/audio stream output from the transport stream decoder 102 for output a video/audio signal Aav. The remote controller 106 is a user interface including an operation means, such as a button key. The remote controller 106 generates an instruction signal Sc indicating an instruction from the user based on the operation of the user on the button key.

The light-receiving unit 107 receives the instruction signal Sc generated at the remote controller 106 for conversion to an electrical signal and output to the microcomputer 105. The OSD controller 108 generates pixel data Spx representing an image to be displayed as an on-screen message OSM on a display 203 for output to the AV decoder 103. The on-screen message OSM includes an image of a data broadcast screen, an image of a homepage screen obtained from the external information server (not shown), and characters and graphics data forming an image of an operation screen for operating the digital television broadcast receiver (the URL information storage system IS1).

The modem 110 is connected to the Internet network NW via a communication line of a communication company or a service provider. The modem 110 obtains an e-mail or homepage data from the Internet network NW, and demodulates the obtained data for output to the microcomputer 105. Furthermore, the modem 110 modulates transmission data, such as an e-mail, created by the microcomputer 105 for output to the communication line. For convenience of description, data to be obtained by the modem 110 from the Internet network NW and then be passed to the microcomputer 105 is referred to as received data Dni, data to be obtained by the modem 110 from the microcomputer 105 for output to the Internet network NW is referred to as transmission data Dno, and the received data Dni and the transmission data Dno are collectively referred to as communication data Dn.

The modem 110 is not restricted to a so-called modem using a telephone line, but may be any communication terminal, such as an ADSL modem using a telephone line, an ONU of FTTH using an optical fiber network, and a cable modem using a cable television line. A connecting scheme is not restricted to a dial-up connecting scheme, but may be a constant connecting scheme. In short, the modem 110 is arbitrary as long as it has a function of modulating and demodulating the communication data Dn in order to cancel a difference in signal format due to a difference in transmission path between the URL information storage system IS1 and the Internet network NW.

The microcomputer 105 includes a transmission-condition check processing section 105a, a mail transmission/reception protocol processing section 105b, a mail creating section 105c, a mail analyzing section 105d, and a WWW browser section 105e. Specifically, the transmission-condition check processing section 105a includes a program for performing a transmission-condition check process in which it is checkedwhether data that satisfies transmission conditions, which will be described further below, is present in data within the URL information IURL or the related information IR.

The mail transmission/reception protocol processing section 105b performs a protocol process for transmitting and receiving an e-mail by using the modem 110, and includes a program for analyzing the received e-mail and a WWW browser for decoding a data broadcast and a homepage for display. The mail creating section 105c includes a program for creating an e-mail. The mail analyzing section 105d determines whether the e-mail contains information. The WWW browser section 105e decodes a data broadcast and a homepage for display on the display 203. A mail acquisition control section 105f controls an operation of acquiring an e-mail transmitted to the URL information storage system IS1, which will be described further below.

A mail server A 120 is a mail sever for use in the digital broadcast receiver (the URL information storage system IS1), and has registered therein a mail address of the digital broadcast receiver (the URL information storage system IS1). The digital broadcast receiver (the URL information storage system IS1) receives e-mails from this mail server A 120.

A mail server B 112 is a mail sever for use in a counterpart terminal (not shown) having another mail address. That is, this server is used when two URL information storage systems IS1 are provided in which different users send URL information via e-mail to each other.

The URL-identification-information memory 118 has stored therein URL identification information Uidx for use in identifying a mail for distributing URL information or the URL information URL in the body of the e-mail. There may be a plurality of pieces of URL identification information Uidx. The URL identification information Uidx has to be predetermined between transmission and reception sides.

The title memory 133 has stored therein a title of a homepage bookmarked by the user. Based on an instruction from the microcomputer 105, the title memory 133 stores a title of a currently-viewed homepage displayed through the WWW browser (the WWW browser section 105e), and also extracts a title described in an HTML file of the received homepage for storage. When the user uses the remote controller 106 to issue an instruction for displaying a bookmark list, the microcomputer 105 reads the titles stored in the title memory 133, and uses the OSD controller 108 to cause the titles to be displayed as a list on the display 203.

The URL memory 132 stores a URL of the homepage bookmarked by the user under the control of the microcomputer 105. Based on an instruction from the microcomputer 105, the URL memory 132 stores a URL of the currently-viewed homepage displayed through the WWW browser, and also store a URL detected by the mail analyzing section 105d.

The titles stored in the title memory 133 and the URLs stored in the URL memory 132 of the same homepage are associated with each other with the use of the bookmark memory 117, which will be described further below. Then, when the user selects a title of a homepage to be viewed from the above-described bookmark list, the microcomputer 105 reads a URL associated with the selected title from the URL memory 132, and then uses the WWW browser and the modem 110 to receive a file specified by the URL from the relevant information server (not shown). Here, the mail transmission/reception protocol processing section 105b, the mail analyzing section 105d, the WWW browser section 105e, and the mail acquisition control section 105f can be each structured as a program in the microcomputer 105, and also can be structured as hardware.

The terminal's-own-ID memory 104 has stored therein a terminal's own ID (denoted as "Tid" in the drawing). The terminal ID is uniquely given to each terminal, and is read under the control of the microcomputer 105 at the time of transmission and reception of an e-mail including a URL. Here, the terminal ID may be stored in the terminal's-own-ID memory 104 by the user using the OSD controller 108 to cause the display 203 to display an on-screen message OSM for input and then inputting, through the remote controller 106, the terminal ID unique among user-owned terminals. Furthermore, a unique value may be stored in advance as the terminal ID before shipment of the digital television broadcast receiver (the URL information storage system IS1). As such, the terminal ID may be arbitrarily set within a use range of the user, or may be uniquely set under the management of the manufacturer at the time of shipment.

The registered information memory 119 has stored therein a terminal name, a folder ID indicative of a folder in each terminal, and a mail address stored in the terminal in association with information indicative of whether the terminal is the terminal of its own. These pieces of information may be stored in the registered information memory 119 by the user using the OSD controller 108 to cause the display 203 to an on-screen message OSM for input through the remote controller 106.

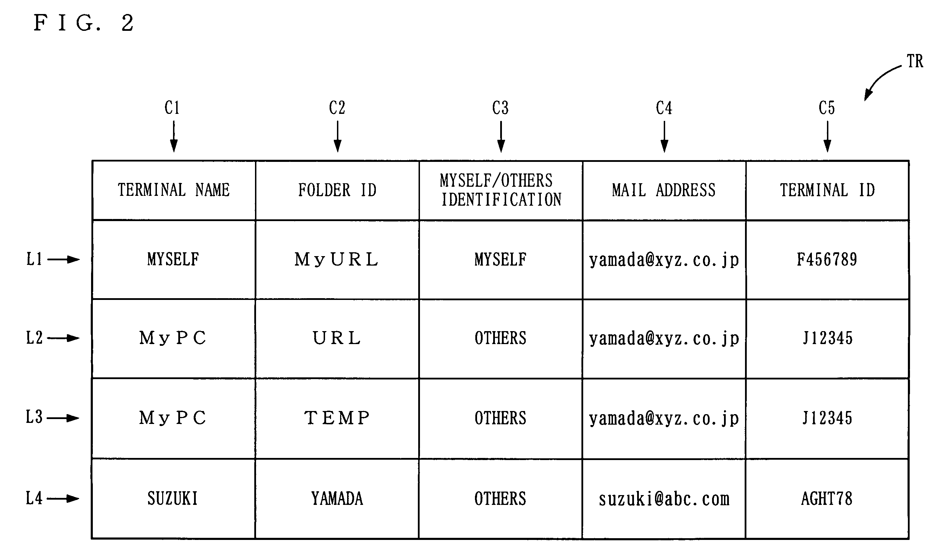

With reference to FIG. 2, data association in the above-described registered information memory 119 is described. Data association is achieved by storing, for each terminal, information about a terminal name, a folder ID, myself/others identification, a mail address, and a terminal ID. Note that, in FIG. 2, for convenience of description, these pieces of association information are schematically shown as a table. In this sense, the association information stored in the registered information memory 119 is referred to as an association table for convenience.

In the present embodiment, an association table TR is exemplarily shown in which four terminals are registered. Columns C1, C2, C3, C4, and C5 in the association table TR correspond to terminal name, folder ID, myself/other identification, mail address, and terminal ID, respectively, which are items of association information Ird. Rows L1, L2, L3, and L4 correspond to four terminals. That is, in the row L1, a terminal with its terminal name of "myself", folder ID of "MyURL", myself/other identification of "myself " , mail address of "yamada@xyz.co.jp", and terminal ID of "F456789" is registered. In the row L2, a terminal with its terminal name of "MyPC", folder ID of "URL", myself/other identification of "other", mail address of "yamada@xyz.co.jp", and terminal ID of "J12345" is registered. In the row L3, a terminal with its terminal name of "myself" , folder ID of "TEMP" , myself/other identification of "other" , mail address of "yamada@xyz.co.jp", and terminal ID of "J11234" is registered. In the row L4, association information Ird of a terminal with its terminal name of "Suzuki", folder ID of "Yamada", myself/other identification of "other" , mail address of "suzuki@abc.com", and terminal ID of "AGHT78" is registered.

As described above, as for the terminal with its terminal name of "myself" in the row L1, the user's mail address and terminal' s own ID are stored in association with each other. Also, as for the terminal with its terminal name of "MyPC") in the row L2, its mail address is identical to that of the terminal with its terminal name of "myself", that is, "yamada@xyz.co.jp", and therefore it can be known that the terminals registered in the rows L1 and L2 belong to the same user. However, their terminal IDs are different from each other as "F456789" and "J12345", and therefore it can be known that the terminals registered in the rows L1 and L2 are not the same.

Furthermore, in the rows L2 and L3, the same information is registered except that the folder IDs are different from each other as "URL" and "TEMP". Therefore, it can be known that the terminals registered in the rows L2 and L3 are the same. Here, the folder ID is an ID for specifying a folder storing a homepage indicated by a URL included in an e-mail, and is used at the reception side.

Here, in the row L4, all pieces of information registered are different from those registered in other rows. Therefore, it can be known that the terminal registered in the row L4 is a different terminal that belongs to a different user from the user of the terminal registered in the row L1 or the row L2 (L3).

Here, it goes without saying that a personal computer (PC), a cellular phone, a portable information terminal, or the like can be registered as the terminal. Also, the URL information IURL and the related information IR may be obtained not only through broadcasting but also through a communication network with the use of the modem 110. Still further, the illustrated configuration allows transmission and reception of an e-mail including a URL. However, the configuration may allow only transmission or reception.

Referring back to FIG. 1, the bookmark memory 117 hierarchically stores a bookmark folder structure, that is, folder names and locations of titles and URLs of homepages stored in each folder. Specifically, the bookmark memory 117 has stored therein folder names corresponding to the folder IDs and folder names set by the user. Also, as for the titles stored in the title memory 133 and the URLs stored in the URL memory 132, their storage address are associatively stored.

The transmission-condition-information memory 121 has stored therein conditions for automatically transmitting the acquired URL information IURL to a terminal. The conditions for automatic transmission to the transmission-condition-information memory 121 can be stored by the user using the OSD controller 108 to cause the display 203 to display an on-screen message OSM for input and then inputting the transmission conditions through the remote controller 106.

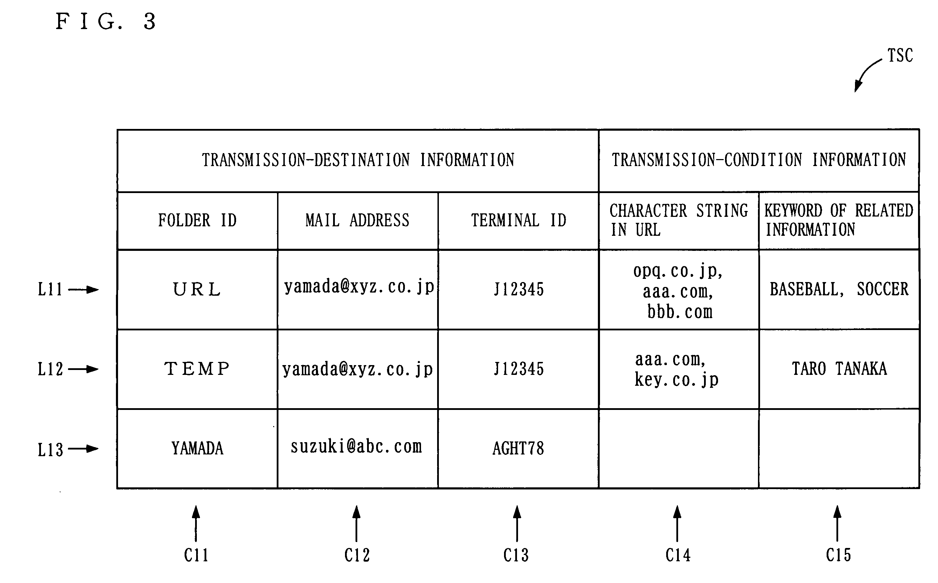

Next, with reference to FIG. 3, automatic transmission conditions stored in the above-described transmission-condition-information memory 121 are described. In this example, automatic transmission condition data Isc is broadly divided into transmission destination information and automatic transmission condition data Isc. The transmission destination information is further divided into a folder ID, a mail address, and a terminal ID. The automatic transmission condition data Isc is divided into a character string in the URL and a keyword of the related information IR. The automatic transmission condition data IscIsc is achieved by storing, for each transmission destination, the transmission destination information and the automatic transmission condition data Isc. Note that, in FIG. 3, for convenience of description, these pieces of information are represented by a table. In this sense, the automatic transmission condition data Isc stored in the transmission-condition-information memory 121 is referred to as an automatic transmission condition table.

In the present embodiment, three transmission destinations are registered in the automatic transmission condition table TSC. Columns C11, C12, C13, C14, and C15 are items of the automatic transmission condition table TSC, and correspond to folder ID, mail address, terminal ID, character string in URL, and keyword of related information IR, respectively. Rows L11, L12, and L13 correspond to three transmission destinations. That is, the row L11 has registered therein a piece of automatic transmission condition data Isc including a transmission destination with its folder ID of "URL", mail address of "yamada@xyz.co.jp", and terminal ID of "J12345", character strings in the URL of "opq.co.jp, aaa.com, bbb.com" and keywords of the related information IR of "baseball, soccer".

The row L12 has registered therein a piece of automatic transmission condition data Isc including a transmission destination with its folder ID of "TEMP", mail address of "yamada@xyz.co.jp", and terminal ID of "J12345", character strings in the URL of "aaa.com, key.co.jp" and keywords of the related information IR of "Taro Tanaka".

The row L13 has registered therein a piece of automatic transmission condition data Isc including a transmission destination with its folder ID of "Yamada", mail address of "Suzuki@abc.com", and terminal ID of "AGHT78", with its character string in the URL and keywords of the related information IR both being blank.

In the present example, the transmission destination conditions registered in the automatic transmission condition table TSC correspond to the terminals stored in the association table TR exemplarily shown in FIG. 2 except those of "myself". The microcomputer 105 can read the information regarding the terminals except those of "myself" stored in the registered information memory 119, and can write the information in a relevant area of the transmission-condition-information memory 121.

The data of the character string in the URL of the automatic transmission condition data Isc is data for comparison with the character string in the URL information IURL to be acquired, and has stored therein a plurality of domain names. The data of the keyword of the related information IR is data for comparison with the related information IR to be acquired, and has stored therein a plurality of genres and actors names. The transmission condition data Isc with its mail address of the transmission destination information of "Suzuki@abc.com" is absent because it is not set on purpose so as not to allow the user to automatically transmit data.

When the URL information IURL acquiring unit 115 acquires the URL information IURL, the microcomputer 105 reads the data (C14) of the character string in the URL and the keyword (C15) of the related information stored in the transmission-condition-information memory 121. Then, the transmission-condition check processing section 105a checks whether the URL information IURL includes the data of the character string in the URL or whether the keyword of the related information IR related to the URL information IURL matches with the keyword of the related information IR. If the keywords match with each other, the corresponding transmission destination is detected, and the transmission destination information is read from the automatic transmission condition table TSC.

The transmission-format-information memory 123 stores information about a format of an e-mail including URL information IURL. Format information Fmt is stored in advance at the time of shipping of the digital television broadcast receiver (the URL information storage system IS1). When transmitting or receiving an e-mail including URL information IURL, the microcomputer 105 reads the format information Fmt.

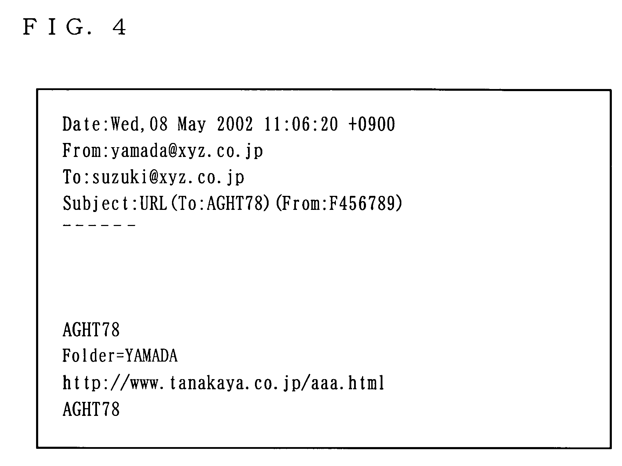

With reference to FIG. 4, the format information Fmt stored in the transmission-format-information memory 123 is described. In FIG. 4, a body of an e-mail is exemplarily illustrated. "Subject:" contains a character of URL, which is data indicating that this mail is a mail for distributing a URL, a terminal ID indicative of a transmission destination terminal (TO: AGHT78), and a terminal ID indicative of a transmission source terminal (From:F456789) in this sequence. In the body, between two terminal IDs (AGHT78), a folder ID (Folder=Yamada) and URL information IURL (http://WWW.tanakaya.co.jp/aaa.html) are placed. These pieces of data are automatically disposed by the microcomputer 105 at the time of transmission. As for "Date:", "From:", and "To:", their formats are identical to those of general e-mails, and therefore are not described herein.

In the present embodiment, the digital television broadcast receiver is described. Alternatively, an analog television receiver will suffice.

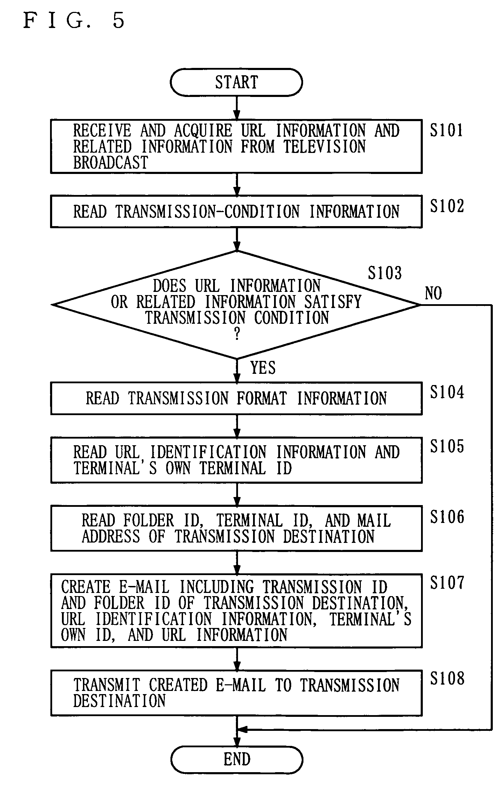

Next, with reference to FIG. 5, an operation of transmitting an e-mail including URL information IURL in the URL information storage system IS1 is described. When the URL information storage system IS1 is powered on, a television broadcast signal is started to be received via the antenna 201.

First, in step S101, from the received television broadcast signal, the packet data PD and the program list information IP are extracted through the tuner 101 and the transport stream decoder 102. The URL information IURL acquiring unit 115 and the related information IR acquiring unit 122 acquire the URL information IURL and the related information IR, respectively, from the program list information IP. Then, the control goes to step S102.

In step S102, the microcomputer 105 reads automatic transmission condition data Isc from the transmission-condition-information memory 121. Then, the transmission-condition check processing section 105a checks the URL information IURL or the related information IR acquired in step S101 with the automatic transmission condition data Isc read in step S102 to determine whether information matching with the automatic transmission condition data Isc is present. If such matching information is present, it is determined as Yes, and the control goes to step S104. On the other hand, if no such matching information is present, it is determined as No, and the operation of the URL information storage system IS1 ends.

In step S104, the microcomputer 105 deletes the transmission destination matching with the automatic transmission condition data Isc, and also reads the format information Fmt of the e-mail from the transmission-format-information memory 123. The procedure then goes to a process of transmitting via e-mail the URL information IURL acquired in step S101 to the detected, relevant transmission destination. Then, the control goes to step S105.

In step S105, the URL identification information Uidx is read from the URL-identification-information memory 118. Also, the terminal's own ID is read from the terminal's-own-ID memory 104 and is then stored in the buffer memory 114. The control then goes to step S106.

In step S106, the folder ID, terminal ID, and mail address of the transmission destination detected in step S104 are read from the transmission-condition-information memory 121, and are then stored in the buffer memory 114. The control then goes to step S107.

In step S107, by using the URL identification information Uidx and terminal's own ID read in step S105 and the folder ID, terminal ID, and mail address of the transmission destination read in step S106, a body of an e-mail is created in accordance with the transmission format (the format information Fmt) detected in step S104. The control then goes to step S108.

In step S108, the e-mail created in step S107 is transmitted via the modem 110. Then, the e-mail transmitting operation of the URL information storage system IS1 ends.

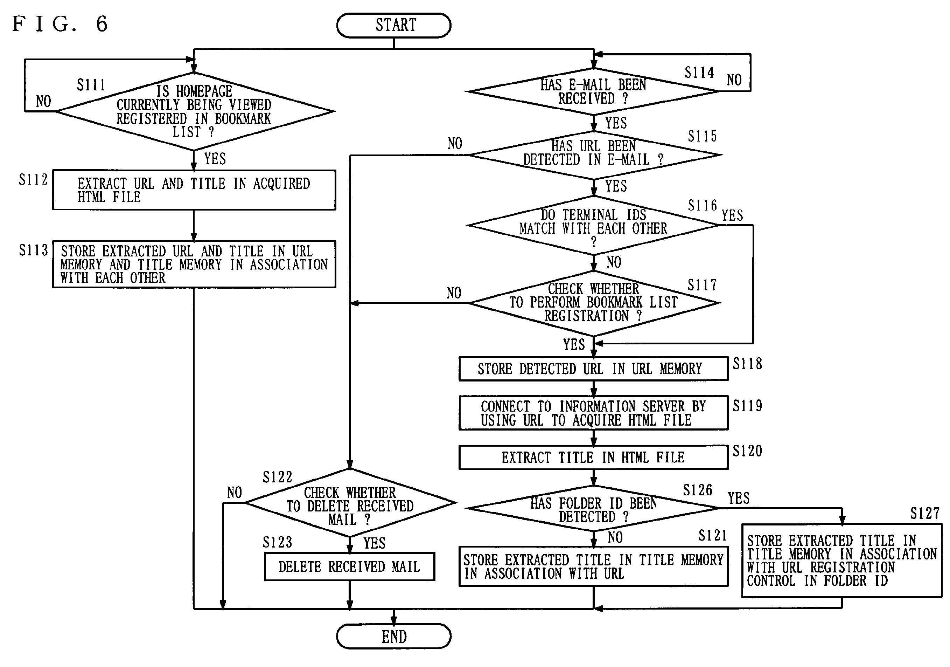

Next, with reference to FIG. 6, an operation of receiving an e-mail including URL information IURL for bookmark registration is described. In the present embodiment, the user can bookmark a homepage currently being viewed through a WWW browser, and also can automatically bookmark a homepage associated with the URL included in the received e-mail. Furthermore, the homepages stored in the above two schemes can be displayed and managed on the same bookmark list.

It is assumed herein that the user is viewing a specific homepage, and when the user wants to bookmark the homepage, the user performs, in step S111, a bookmarking operation by using the remote controller. The operation may be performed by pressing a dedicated key or in accordance with a GUI on the screen. The control then goes to step S112.

In step S112, the microcomputer 105 interprets the instruction from the user to extract the URL and title of the homepage from the HTML file acquired by the WWW browser section. The control then goes to step S113.

In step S113, the extracted URL and title are stored in the URL memory 132 and the title memory 133, respectively. At this time, the title and the URL are stored in association with each other. This association can be achieved by associating the address stored with the bookmark memory 117. With the above operation, the homepage currently being viewed by the user with the WWW browser can be bookmarked. Then, the control ends.

On the other hand, when an e-mail is received, it is determined in step S114 as Yes. In this case, the mail transmission/reception protocol processing section 105b acquires the body of the e-mail. Furthermore, the format information Fmt of the e-mail is read from the transmission-format-information memory 123. With this, the format of the mail is detected.

Still further, it is determined in step S115 whether URL identification information Uidx is present at a specific location of the e-mail. That is, the URL identification information Uidx is read from the URL-identification-information memory 118, and the mail analyzing section 105d analyzes whether URL identification information is present at the specific location of the received e-mail body. If it is determined that such information is present, the control goes to step S116.

In step S116, the terminal's own ID is read from the terminal's-own-ID memory 104, and then it is determined whether a character string matching with the terminal's own ID is present at a predetermined location in the received e-mail indicative of a terminal ID of the transmission destination. If there is a match, it is determined as Yes that automatic bookmark registration is possible. The control then goes to step S117.

In step S117, if the URL is detected but there is no match with the terminal's own ID or the terminal' s own ID cannot be detected, the OSD controller 108 is used to cause the display 203 to display an on- screen mes sage OSM conf irming whether the homepage associated with the detected URL is to be bookmarked, thereby prompting the user for selection.

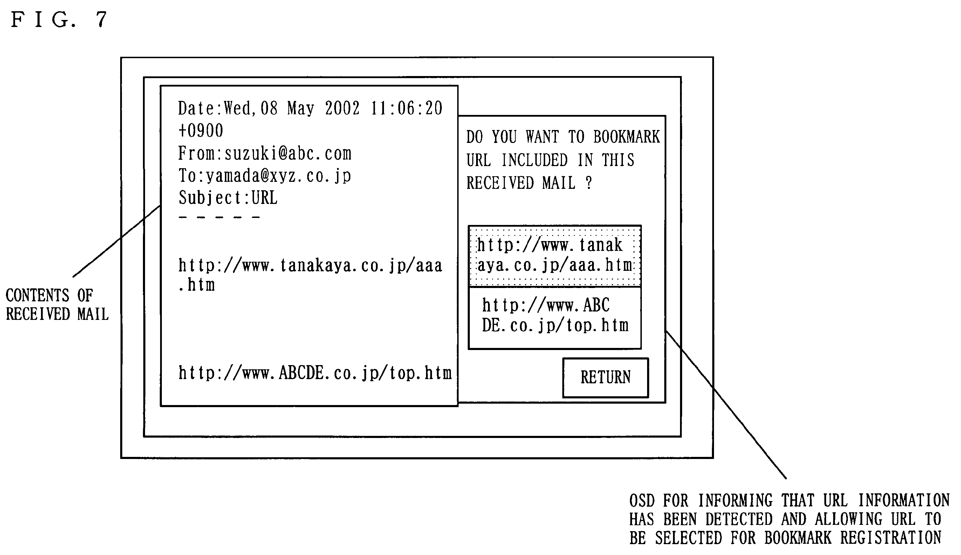

Exemplarily illustrated in FIG. 7 is an on-screen message OSM displayed on the display 203. Illustrated in the drawing is an exemplary case in which an e-mail is received upon operation by the user and its contents are displayed. The received e-mail and the on-screen display OSD are simultaneously displayed on the screen. It has been detected that the received e-mail contains two URLs, and the on-screen message OSM for selection of one or both of these two URLs for bookmarking is displayed. In the on-screen message, the detected URLs are displayed so as to be arranged as buttons. The microcomputer 105 can interpret selection or pressing of a button through the remote controller 106. By pressing a button with the use of up and down keys and an enter key on the remote controller 106, the user can select and determine a URL to be registered. If all of the detected URLs are not to be registered, a return button is selected and determined, thereby canceling the storing operation.

Returning to FIG. 6, in step S117, if the user uses the remote controller 106 to issue an instruction for registration or it is determined as YES in step S116, the control goes to step S118.

In step S118, the URL detected in step S115 is stored in the URL memory 132. The control then goes to step S119.

In step S119, the detected URL is used for connection to the relevant information server (not shown) with the use of the WWW browser section and the modem 110, thereby receiving an HTML file of the contents specified by the URL. The control then goes to the next step S120.

In step S120, the received HTML file is interpreted, and the title is extracted. The control then goes to step S126.

In step S126, it is determined whether a character string of the folder ID is present at a predetermined location in the received e-mail body. If no folder ID is detected, the control goes to step S121. On the other hand, if it is detected, the control goes to step S127.

In step S121, in a manner similar to that in step S113, the title extracted in step S120 is stored in the title memory 133 in association with the URL detected in step S115.

Then, the control ends.

In step S127, it is interpreted as that the sender has not particularly specified a folder for storage, and then in a manner similar to that in step S121, the title is stored in the title memory 133 in association with the URL and is controlled in registration so as to be stored in a folder determined by default in the bookmark memory 117. The def ault folder may be, for example, a route folder. The control then ends.

If a folder ID is detected in the above step S114, in a manner similar to that in step S113, the title extracted in step S120 is stored in the title memory 133 in association with the URL detected in step S5 (step S117). In this case, it is interpreted as that the sender has specified a folder in which the URL is to be stored, and then the control is performed so that the URL is stored in the folder indicated by the folder ID in the bookmark memory 117. Here, the HTML file contains a title, and its identifying scheme is commonly known in the HTML, and therefore is not described herein.

If the user provides a rejection in step S115 or step S117, an on-screen message OSM confirming whether the received mail is to be deleted is displayed with the use of the OSD controller 108, and then a user's decision is waited (step S122). If the user decides to delete the e-mail, the e-mail is deleted (step S123).

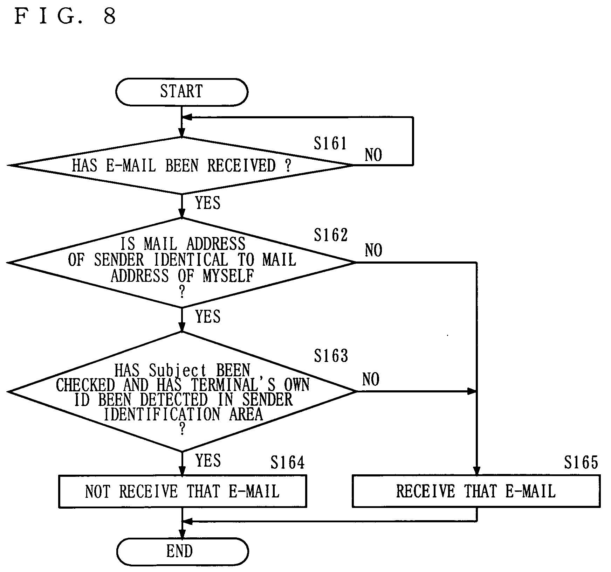

Next, with reference to FIG. 8, the operation in the above step S114 is described in detail. In the present embodiment, an example can be thought in which an e-mail including the above-described URL is transmitted and received between two terminals owned by the user. For example, URL information IURL acquired by a television receiver from a broadcast is automatically transmitted, and is received later at another location by a PC or a cellular phone. Also, in such a case, each terminal may have the same mail address. When the user receives an e-mail at one terminal, the terminal may not necessarily be a terminal which is supposed to receive the e-mail. If reception is made at a terminal other than the terminal which is supposed to receive the e-mail, the e-mail is erased at a mail server, thereby making it impossible for the terminal which is suppose to receive the e-mail to receive the e-mail. An exemplary operation in order to cope with such a case is described.

The flowchart in the drawing shows an operation when receiving the e-mail described with reference to the above-described FIG. 4. When an e-mail is received (step S161), the microcomputer 105 uses the modem 110, the mail reception protocol processing section 105b, and the mail analyzing section 105d to detect in a sender's mail address in the e-mail to be received (in Fig. 4,) "From: yamada@xfz.co.jp"), and then to check whether the sender mail address is identical to a mail address stored in a non-volatile memory not shown and given to the terminal (step S162). If they are identical to each other, Subject is next checked to see whether the terminal ID in the transmission source terminal ID area (in FIG. 4), an area following "From:") matches with the terminal's own ID stored in the terminal's-own-ID memory 104 (step S163).

If there is a match, it is determined that the mail has been transmitted from the terminal itself, and that e-mail is not received (step S164). In the checking processes in step S162 and step S163, when the sender's mail address is not identical to the mail address of the terminal itself, or no data coinciding with the terminal's own terminal ID is present in the sender area of Subject, the e-mail is received (step S165), and the procedure then goes to step S115.

As such, with a control by using a terminal ID to see whether reception is possible, such a control not being provided to conventional e-mail system, e-mails in the mail server can be adjustably deleted. This solves the problem in which a transmission terminal erroneously receives an e-mail including URL information IURL transmitted by itself to prevent a terminal which is supposed to receive the e-mail from receiving the e-mail. Here, the terminal ID is placed in Subject because Subject can be read before reception in major e-mail reception protocols, such as IMAP4.

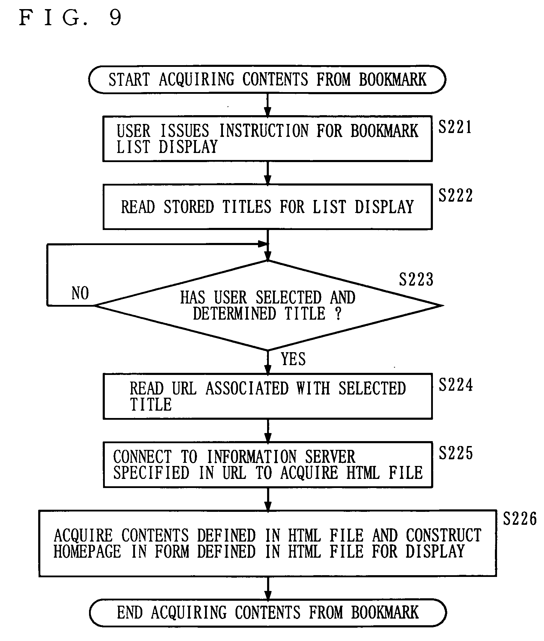

Next, the operation of displaying a bookmark list to view a homepage is described by using FIG. 9.

When the user uses the remote controller 106 to issue an instruction for display a bookmark list (step S221), the microcomputer 105 reads the folder names stored in the bookmark memory 117, their hierarchical structure, and the titles stored in the title memory 133, and then uses the OSD controller 108 for a list display (step S222).

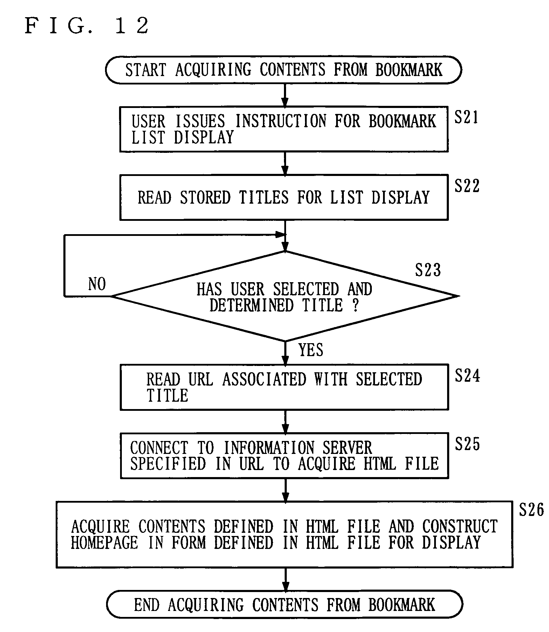

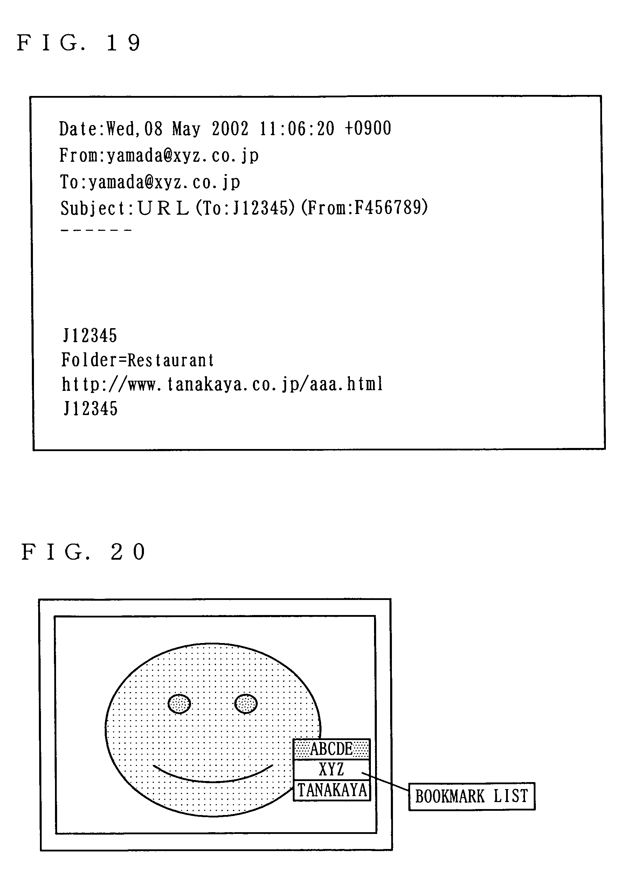

An exemplary case of a bookmark list display is described by using FIG. 20. FIG. 12 is an illustration showing a bookmark list display in the first embodiment of the present invention. As can been seen from FIG. 20, titles of three homepages stored are displayed as a list. Each title in the list is formed as a button that can be selectably pressed with the remote controller 106. By using the remote controller 106, the user can select and determine a title.

In FIG. 9, when the user selects and determines a title (step S223), the microcomputer 105 reads a URL associated with the selected title from the URL memory 132 (step S224). Next, the microcomputer 105 uses the read URL for connection to the relevant information server (not shown) by using the WWW browser section and the modem 110, thereby reading an HTML file of the contents specified by the read URL (step S225).

Next, the microcomputer 105 interprets the HTML file to acquire an image file, a text file, etc., each of which is an individually-defined piece of data, by using the WWW browser section and the modem 110, and then appropriately decodes the file in accordance with its attribute, and also assembles the decoded contents in accordance with the contents of the simultaneously-inputted HTML file for reproducing the homepage. Next, the microcomputer 105 converts the reproduced homepage to pixel data and then uses the OSD controller 108 for display, and also interprets the HTML file to acquire the URL and title of the homepage (step S226).

As described above, in the present embodiment of the present invention, an e-mail automatically transmitted from a digital television broadcast receiver is stored in an external mail server. Therefore, a storage area for the acquired information is not required in the digital television broadcast receiver. Also, of the information transmitted one by one via broadcast, information selected under predetermined conditions is stored automatically in the mail server. Therefore, the user can select information transmitted one by one from various media according to the user's preferences. Also, by using another terminal, such as a cellular phone or a PC, owned by the user, the user can receive an e-mail anytime for viewing and bookmarking at any place where e-mails are receivable.

Furthermore, of the URL information included in broadcast signals, which are provided under a pull-type data distribution service, only information desired by the user is automatically acquired and the acquired URL is then provided to the user as part of an e-mail. With this, a convenience such as that given under a push-type data distribution service can be provided to the user. Still further, with the use of an e-mail as a means for providing a URL, the e-mail is stored on the mail server even if the user is out or the like and therefore cannot acquire the URL information. Therefore, the user does not have to pick up the provided URL on a real-time basis, and can acquire the desired URL without time restrictions. Still further, as long as the environment satisfies e-mail availability, the location where the URL is acquired is also unrestricted. Still further, with a terminal ID being included in an e-mail, it is also possible, based on the terminal ID, to store URLs in a terminal in which the user wants to store URLs in a concentrated manner.

### (Second Embodiment)

In the following, a second embodiment is described with reference to the drawings.

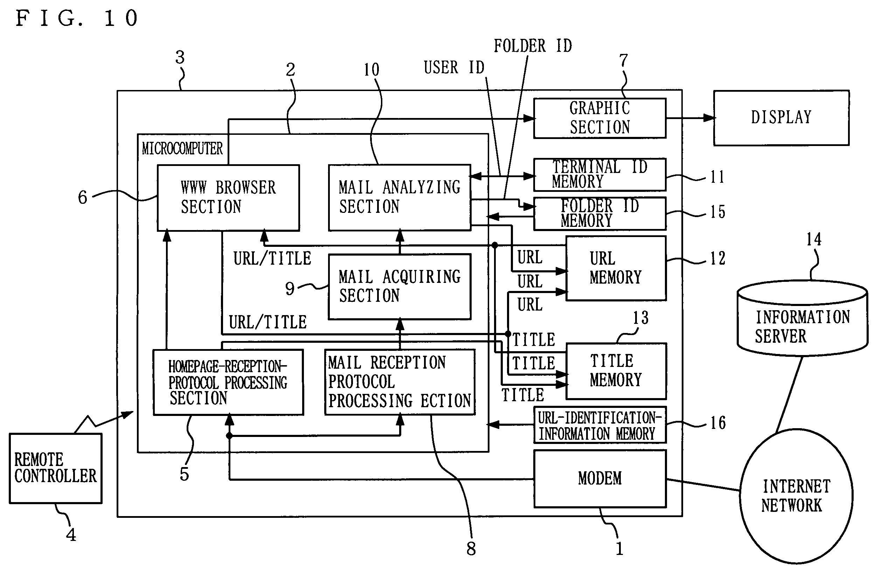

FIG. 10 is a block diagram showing the configuration of the first embodiment of the present invention. The first embodiment shows an exemplary embodiment of an information acquiring device. In FIG. 10, 1 denotes a modem being connected to the Internet network via a communication line of a communication company or a service provider not shown for receiving data through the communication line under the control of a microcomputer 2, which will be described further below, for demodulation and output and for modulating transmission data for output to the communication line. The modem 1 is not restricted to a so-called modem using a telephone line, but may be any communication terminal, such as an ADSL modem using a telephone line, an ONU of FTTH using an optical fiber network, or a cable modem using a cable television line. A connecting scheme is not restricted to a dial-up connecting scheme, but may be a constant connecting scheme.

The microcomputer denoted as 2 controls each component of an information acquiring device 3 and also achieves a homepage-receiving-protocol process, a mail-reception-protocol process, mail acquisition control, mail analysis, and WWW browser function by software programs. 4 denotes a remote controller, which is a user interface of the information acquiring device 3 having up, down, right, and left cursor keys, an enter key, a return key, a bookmark-list display key, etc.

The microcomputer 2 receives data superposed on an infrared ray output from the remote controller 4 via a remote-controller light-receiving circuit not shown, and interprets an instruction from the user. 5 is a homepage-reception-protocol processing section, which is a portion which performs a process regarding a communication protocol, such as TCP/IP and HTTP, for homepage-related data communication via the modem 1. 6 denotes a WWW browser section, which is software similar to Internet Explorer (trademark of Microsoft Corporation) on a personal computer, for receiving an input of an image, text, etc., each of which is an individual piece of data output from the homepage-reception-protocol processing section 5, to appropriately decode the data in accordance with an attribute of YESru, assemble the decoded contents in accordance with the contents of the simultaneously-inputted HTML file for reproducing the homepage and converting the homepage into pixel data, and also to interpret the HTML file to acquire the URL and title of the homepage.

The reproduced homepage is rendered with pixel data on a display plane of a graphic section 7, and is then output as video data. The graphic section 7 also performs a scaling process of reducing and magnifying a display size of the rendered data upon instruction from the microcomputer 2. To the graphic section 7, memories for pixel conversion and a scaling process are normally connected, but are not directly related to the present invention and therefore are not shown herein. 8 denotes a mail-reception-protocol processing section for receiving an input of e-mail-related data received by the modem 1 and performing a process regarding a protocol, such as TCP/IP or POP, for output. 9 denotes a mail acquiring section for receiving an input of data output from the mail-reception-protocol processing section 8 and extracting data of the received-mail.

10 denotes a mail analyzing section for analyzing the data of the received mail extracted by the mail acquiring section 9, detecting a predetermined character string, such as URL information IURL, a user ID, or a folder ID, and then outputting the detection results. In general, an e-mail function includes a transmission function, which is not directly related to the present invention and therefore is not described herein. 11 denotes a terminal ID memory having stored therein a terminal's own terminal ID for use in authenticating a sender of an e-mail. A sender who knows the terminal's own terminal ID is authenticated. A plurality of such terminal IDs may be provided.

The terminal ID, which is read under the control of the microcomputer 2 when the mail analyzing section 10 analyzes whether a character string identical to the terminal ID is included, can be written by using the graphic section 7 under the control of the microcomputer 2 to cause an OSD (On Screen Display) for input to be displayed and by allowing the user to use the remote controller 4 to enter and determine the terminal ID. 15 denotes a falder ID memory for storing a folder ID transmitted for specifying a folder in which a homepage associated with the URL included in the e-mail is to be registered for bookmarking, which will be described further below. Here, the folder ID may be a falder name.

As a result of analysis performed by the mail analyzing section 10 to see whether a character string indicative of the folder ID is included, if the folder ID is present, the folder ID is written under the control of the microcomputer 2. A plurality of folder IDs may be provided correspondingly to the number of URLs. 16 denotes a URL-identification-information Uidx memory having stored therein URL identification information Uidx for use in identifying whether the received e-mail has been transmitted for the purpose of registering the URL information IURL.

A plurality of pieces of URL identification information Uidx may be provided. The URL identification information Uidx has to be predefined with the sender. 13 is a title memory for storing titles bookmarked by the user. In one case, the title of a homepage currently being viewed and displayed on the WWW browser section is written under the control of the microcomputer 2. In another case, a title contained in the HTML file received by the homepage-reception-protocol processing section is extracted and written under the control of the microcomputer 2.

When the user uses the remote controller 4 to issue an instruction for displaying a bookmark list, the titles written under the control of the microcomputer 2 are read and displayed by using the graphic section 7. 12 denotes a URL memory for storing URLs bookmarked by the user. In one case, the URL of a homepage currently being viewed and displayed on the WWW browser section is written under the control of the microcomputer 2. In another case, the URL detected by the mail analyzing section 10 is written under the control of the microcomputer 2.

The titles and the URLs written in the title memory 13 and the URL memory 12 of the same homepage are associated with each other, which will be described further below in detail. When the title of the homepage to be viewed by the user is selected from the above-described bookmark list, the associated URL is read under the control of the microcomputer 2. Then, by using the WWW browser section 6, the home page-reception-protocol section 5, and the modem 1, connection to a relevant information server 14 is established for receiving YESru specified by the read URL. Here, a homepage protocol process, a mail-reception-protocol process, mail acquisition control, mail analysis, and a WWW browser function may be achieved not only by software but by hardware.

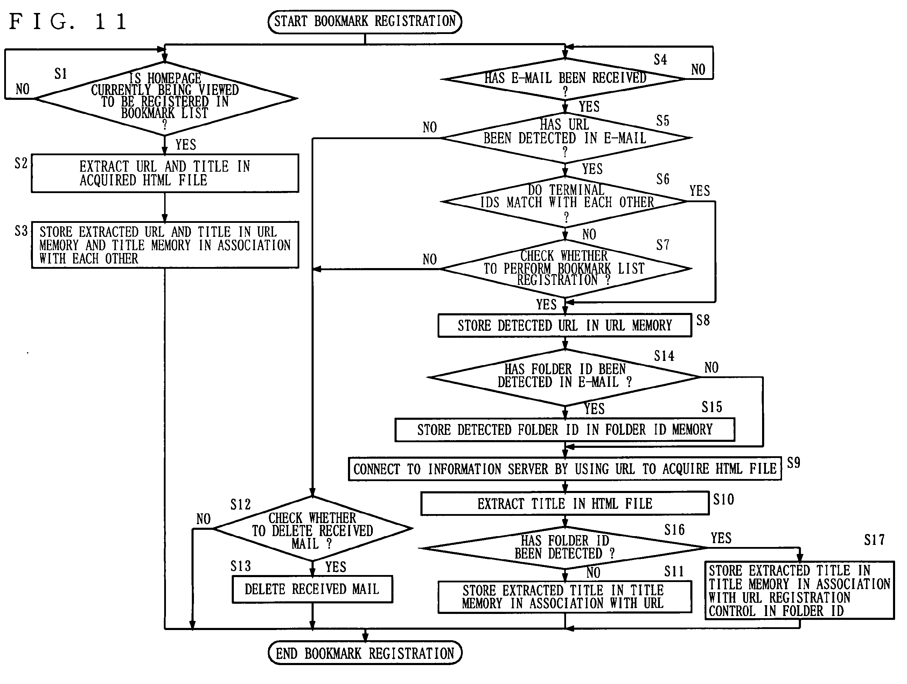

Next, an operation is described by using FIGS. 11 and 12. FIGS. 11 and 12 are operation flowcharts in the first embodiment of the present invention. In the present embodiment, the user can bookmark a homepage currently being viewed with the WWW browser, and also can automatically bookmark a homepage associated with a URL contained in a received e-mail. Also, the homepages registered through both of the above-described schemes can be displayed and managed on the same bookmark list.

In FIG. 11, it is assumed that the user is viewing a specific homepage with the WWW browser. When the user wants to bookmark the homepage, the user performs an operation for bookmark registration by using the remote controller 4 (step S1). The operation may be performed by pressing a dedicated key or in accordance with an OSD on a screen. The microcomputer 2 then interprets the instruction, and extracts the URL and title of the homepage from the HTML file acquired by the WWW browser section 6 (step S2). Next, under the control of the microcomputer 2, the extracted URL is stored in the URL memory 12 and the extracted title is stored in the title memory 13 (step S3). At this time, the title and the URL are stored in association with each other. This association can be achieved by retaining storage addresses in a separate memory not shown in association with each other, or by correlating addresses retained in advance in a memory.

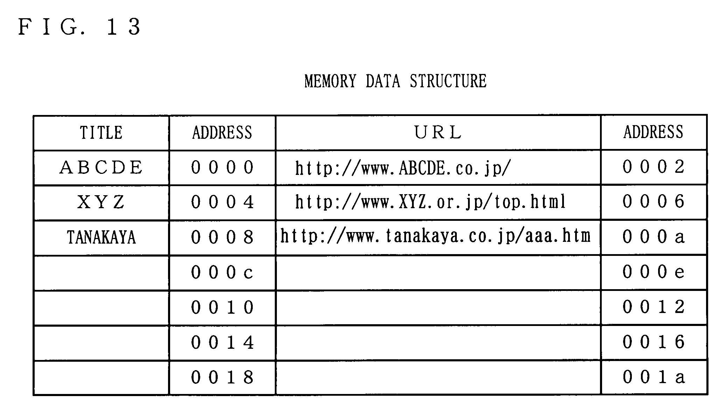

By way of example, description is made by using FIG. 13 to an example where areas on the same memory are separately used as the URL memory and the title memory and are associated with each other through an address correlation. FIG. 13 is an illustration showing a data structure according to the first embodiment of the present invention. In FIG. 13, the example is shown in which seven homepages can be registered and three homepages have been currently stored. An address is an address where the title or the URL is stored, and is indicated in FIG. 13 in hexadecimal notation. In this case, the title and the URL are associated in a manner such that their addresses are (4n) and (4n+2), respectively. With each of the seven homepages assigned with a unique n (0 to 6), the title and URL of the unique homepage can be managed in association with each other.

With the above operation, the URL and title of the homepage currently being viewed by the user with the WWW browser can be bookmarked. Also, when an e-mail is received through an operation by the user (step S4), under the control of the microcomputer 2, data of the received mail is acquired with the use of the modem 1, the mail-reception-protocol processing section 8, and the mail receiving section 9. Next, the microcomputer 2 uses the mail analyzing section 10 to analyze whether a predetermined character string is present in the data to detect a URL (step S5).

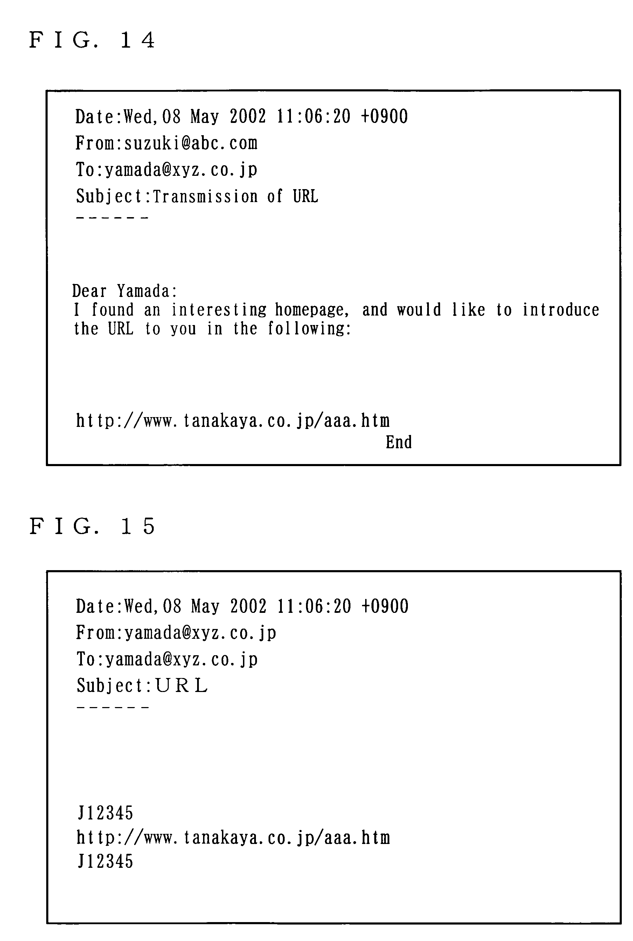

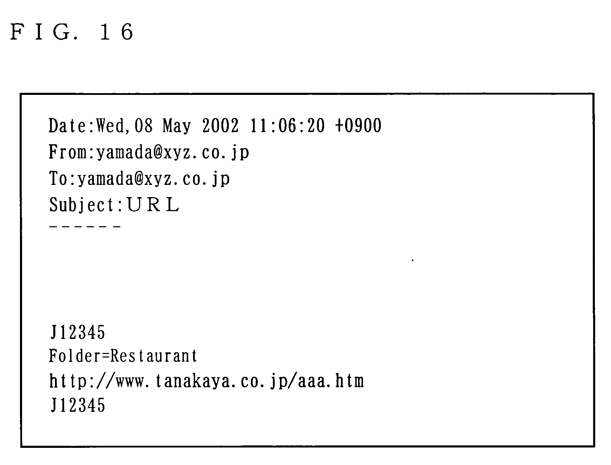

This analysis is described by using FIGS. 14 and 15. FIGS. 14 and 15 are illustrations showing received mail data according to the first embodiment of the present invention. FIGS. 14 and 15 each illustrate text data of the received mail output from the mail acquiring section 9. Illustrated inn FIG. 14 is an example in which the mail analyzing section 10 searches for a character string starting with http:// for detecting a URL. Here, it is evident that a URL of http://www.tanakaya.co.jp/aaa.htm in the data can be detected. The end of the URL can be detected with a return.

Illustrated in FIG. 15 is an example in which the mail analyzing section 10 searches for a terminal ID of J12345 and a character string starting with http:// for detecting a URL. Here, it is evident that a URL of http://www.tanakaya.co.jp/aaa.htm in the data can be detected. The end of the URL can be detected with a return. Also, as will be described in detail, with the use of the terminal ID of J12345, the sender can be authenticated, and also bookmark registration can be controlled.

In FIG. 11, the mail analyzing section 10 also analyzes whether a character string matching with the terminal ID stored in the terminal ID memory 11 is present in the data of the received mail. Under the control of microcomputer 2, all terminal IDs in the terminal ID memory are read for checking with the data of the received mail. If there is a data match, the user can be successfully authenticated, and also it is determined that bookmarking is allowed (step S6). Here, in FIG. 15, the terminal IDs are located so as to sandwich the URL. Alternatively, the terminal ID may be located at Subject, or may be located at an arbitrary position as long as it is predetermined.

In FIG. 11, if the URL is detected but the terminal IDs do not match with each other or no terminal ID cannot be detected, under the control of the microcomputer 21, the graphic section 7 is used to cause an OSD to be displayed for checking whether the homepage associated with the detected URL is to be bookmarked, and a selection by the user is waited (step S7). This display is described by using FIG. 7. FIG. 7 is an illustration showing the case inwhich a receivedmail is displayed in the first embodiment of the present invention.

Illustrated in FIG. 7 is an example in which an e-mail is received through an operation by the user and its contents are displayed. The received mail contains two URLs , which are detected by the microcomputer 2 through the above-described scheme, and an OSD for selection of one or both of these two URLs for bookmarking is displayed. In the OSD, the detected URLs are displayed so as to be arranged as buttons. The microcomputer 2 can interpret selection or pressing of a button through the remote controller 2. With this, by using the up key and/or down key and the enter key of the remote controller 4, the user can select and determine a URL to be registered. If all of the detected URLs are not to be registered, a return button is selected and determined, thereby canceling the registering operation.

In FIG. 11, when the user uses the remote controller 4 to issue an instruction for registration, the URL detected in step S5 is stored in the URL memory 12 under the control of the microcomputer 2 (step S8). Then, the mail analyzing section 10 also analyzes whether a character string indicative of a predetermined folder ID is present in the data of the received mail (step S14), which is described by using FIG. 16. FIG. 16 is an illustration showing received mail data in the first embodiment of the present invention. Illustrated in FIG. 16 is an example in which the mail analyzing section 10 searches for a terminal ID of J12345 and a character string of http:// for detecting a URL. It is evident that a URL of http://www.tanakaya.co.jp/aaa.htm can be detected.

The end of the URL can be detected with a return. Also, by detecting the terminal ID of J12345, the sender can be successfully authenticated. Still further, as for a character string of Folder=restaurant, Folder= indicates that a character string that follows is a folder ID, and a character string of restaurant can be detected. The sender makes the folder ID contained because the sender wants to register the URL in the folder named restaurant in the bookmark list. The character string of Folder= indicative of a folder ID is arbitrary as long as it is determined in advance with the sender before mail reception. The microcomputer 2 extracts the folder ID for storage in the folder ID memory 15 in association with the URL detected in step S5 (step S15).

Also, the microcomputer 2 uses the detected URL for connection to the relevant information server 14 with the use of the WWW browser section 6, the homepage-reception-protocol section 5, and the modem 1, and then receives an HTML file of the contents specified by the detected URL (step S9). Next, the microcomputer 2 interprets the HTML file received by the homepage-reception-protocol section 5 to extract a title (step S10). If no folder ID is detected in step S14, the title is stored in the title memory 13 in a manner similar to that in step S3 in association with the URL detected in step S5 (step S11).

In this case, the microcomputer 2 performs control such that it is interpreted as that the sender has not particularly specified a folder in which the URL is to be registered, and registration is then made in a folder determined by default. The default folder may be, for example, a root folder.

If a folder ID is detected in step S14, the title is stored in the title memory 13 in a manner similar to that in step S3 in association with the URL detected in step S5 (step S17). In this case, it is interpreted as that the sender has specified a folder in which the URL is to be registered, and the microcomputer 2 performs control such that registration is made in a folder indicated by the folder ID stored in the folder ID memory 15.

Here, the HTML file contains a title, and its identifying scheme is commonly known in the HTML, and therefore is not described herein. If the user provides a rejection in step S5 or step S7, an OSD for checking whether the received mail is to be deleted is displayed by using the graphics section 7 under the control of the microcomputer 2, and the a decision by the user is waited (step S12). If the user decides to delete the mail, the received mail is deleted (step S13).

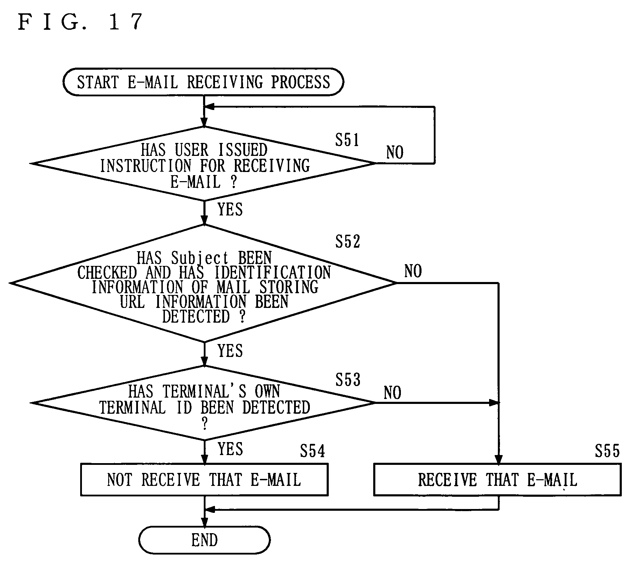

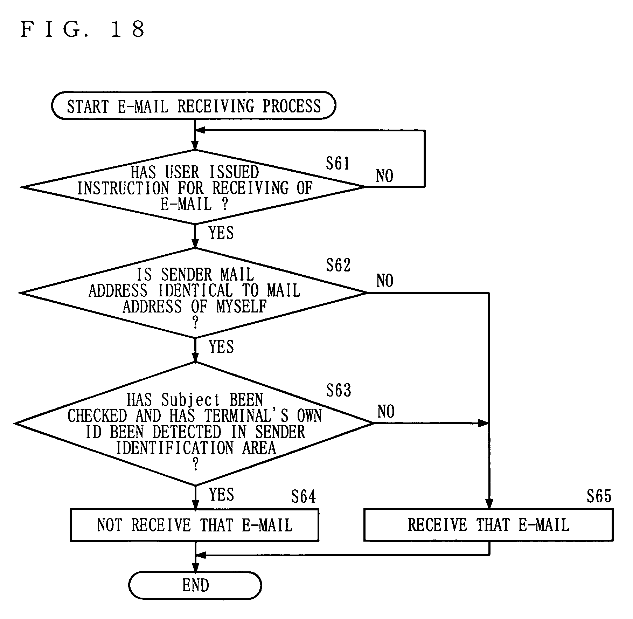

Next, step S4 is described in more detail by using FIGS. 17 and 18. FIGS. 17 and 18 are operation flowcharts according to the first embodiment of the present invention. In the present embodiment, an e-mail may be transmitted and received between terminals owned by the user for the purpose of registering the above-described URL. For example, in one using scheme, an e-mail is transmitted from a television receiver and received by a PC, and vice versa. In such cases, the same mail address may be used at each terminal. When the user receives an e-mail, a terminal to be used is not necessarily a terminal which is supposed to receive the e-mail.

If a terminal other than the terminal which is supposed to receive the e-mail receives the e-mail, the e-mail is deleted at a mail server, and the terminal which is supposed to receive the e-mail is prevented from receiving the e-mail. An example for getting around such a case is described. FIG. 19 is an illustration showing data of a received mail according to the first embodiment of the present invention.

A flowchart in FIG. 18 shows an example in which the e-mail shown in FIG. 19 is to be received. When the user uses a terminal to issue an instruction for receiving an e-mail (step S61), the microcomputer uses the modem 1, the mail-reception-protocol processing section 8, the mail acquiring section 9, and the mail analyzing section 10 to detect a sender's mail address (in FIG. 19, From: yamada@xfz.co.jp) of an e-mail to be received, and then checks whether the sender's mail address is identical to the mail address stored in a non-volatile memory not shown and given to the terminal itself (step S62).

If the addresses are identical to each other, Subject is next checked to see whether a terminal ID in a sender area (in FIG. 19, an area following From:) is identical to the terminal ID stored in the terminal ID memory 11 (step S63). If there is a match, it is determined that the mail has been transmitted from the terminal itself, and then the mail is not received (step S64) . As a result of the check in step S62 or S63, if the sender's mail address is not identical to the mail address of the terminal or if no data is present in the sender area of Subject, the e-mail is received (step S65), and then the procedure goes to step S5 in FIG. 11.

In this case, the sender area in which the terminal ID is written is not necessarily an area following From: in Subject, but may be in the body, as shown in FIG. 16. Another example is described by using FIG. 17. FIG. 17 is an operation flowchart in the first embodiment of the present invention. The flowchart of FIG. 17 shows an example in which the e-mail shown in FIG. 16 is to be received. When the user uses a terminal to issue an instruction for receiving an e-mail (step S51), the microcomputer uses the modem 1, the mail-reception-protocol processing section 8, the mail acquiring section 9, and the mail analyzing section 10 to detect Subject information (URL in FIG. 16) of the e-mail to be received, and then checks to see whether the information is identical to the URL identification information Uidx stored in the URL-identification-information memory 16 (step S52).

If they are identical to each other, the body is next checked to see whether data matching with the terminal ID stored in the terminal ID memory 11 is present (step S53). If there is a match, it is determined that the mail has been transmitted from the terminal itself, and then the e-mail is not received (step S54).

As a result of the check in step S52 or step S53, if the URL identification information Uidx is not detected or the terminal ID is not detected, the e-mail is received (step S55), and the procedure then goes to step S5 in FIG. 11. In this case, the URL identification information Uidx may not be present in Subject but in the body, and the terminal ID may be present in Subject.

Next, an operation when the bookmark list is displayed for viewing a homepage is described by using FIG. 12.

In FIG.12, when the user uses the remote controller 4 to issue an instruction for a bookmark list display (step S21), the titles stored in the title memory 13 are read under the control of the microcomputer 2, the graphics section 7 is used for a list display, and then a selection by the user is waited (step S22).

An example of the bookmark list display is descried by using FIG. 20. FIG. 20 is an illustration showing the bookmark list display according to the first embodiment of the present invention. As can been seen from FIG. 20, titles of three homepages registered are displayed as a list. Each title in the list is formed as a button that can be selectably pressed with the remote controller 4. By using the remote controller 4, the user can select and determine a title.

In FIG. 12, when the user selects and determines a title (step S23), under the control of the microcomputer 2, the URL associated with the selected title is read from the URL memory 12 (step S24). Next, the microcomputer 2 uses the read URL for connection to the relevant information server 14 with the use of the WWW browser section 6, the homepage-reception-protocol section 5, and the modem 1, and then receives an HTML file of the contents specified by the read URL (step S25).

Next, the microcomputer 2 interprets the HTML file to acquire an image file, a text file, etc., each of which is an individual defined data, with the use of the WWW browser section 6, the homepage-reception-protocol section 5, and the modem 1, appropriately decodes the data in accordance with the attribute of the file. Also, the contents decoded in accordance with the details of the HTML file similarly received for reproducing the homepage, and conversion to pixel data is performed for display by using the graphics section 7 , and also the HTML file is interpreted for acquiring the URL and title of the homepage (step S26).

As described above, the homepage currently being viewed by the user can be bookmarked. Also, the homepage associated with the URL described in the received e-mail can be registered in the same bookmark memory. Therefore, the homepages registered in both schemes can be displayed and maintained with the same bookmark list.

As described above, in the information acquiring device according to the present invention, the homepage currently being viewed by the user can be bookmarked, and also the homepage associated with the URL described in the received e-mail can be automatically bookmarked. In that case, the sender can be authenticated, and a storage folder can be specified. Furthermore, when the transmission terminal is the terminal itself, the e-mail can be prevented from being received.

Here, the homepages registered through both of the above schemes can be displayed and managed with the same bookmark list. Therefore, when a homepage is bookmarked, the URL is acquired from the received e-mail for automatic bookmarking, thereby allowing bookmarking to be performed at a location away from the terminal or by another terminal. Also, for bookmarking, an operation of copying the URL contained in the received mail and then pasting the URL for bookmarking does not have to be manually performed. The operation can be performed without using a pointing device, such as a mouse for specifying a range of a character string, but with a device provided only with keys, such as a remote controller for television.

### (Third Embodiment)

In the following, a third embodiment of the present invention is described with reference to the drawings. The third embodiment shows an example of an information providing device.

FIG. 21 is a block diagram showing the configuration according to the third embodiment of the present invention. In FIG. 21, 53 denotes a digital television broadcast receiver. 41 denotes a tuner for selecting a channel of a digital television broadcast received by the antenna and then outputting a demodulated transport stream TS. 42 denotes a transport stream decoder for receiving an input of the transport stream TS output from the tuner 41 and performing filtering on a video/audio stream AVS of the program selected by the user and data-broadcast-related packets for output. It is a known technology that the filtering is performed by using PID contained in a PAT packet or a PMT packet, and therefore is not described in detail herein.

43 denotes an AV decoder for receiving an input of the video/audio stream AVS output from the transport stream decoder 2 for AV decoding and output. 44 denotes a buffer memory for developing, under the control of the microcomputer 45, the packets of data broadcasts after filtering by the transport decoder 42, the data of the homepage acquired from an information not shown by a modem 50, etc., for storage.

45 denotes a microcomputer for controlling each component of the digital television broadcast receiver 53 and performing a protocol process for transmitting e-mails by using a modem 50. Also, the microcomputer is provided with a program for creating e-mails and a browser for decoding a homepage for display. 46 denotes a remote controller, which is a user interface. 47 denotes a light-receiving circuit for receiving a signal from the remote controller 46 and outputting an electrical signal to the microcomputer 45. 48 is an OSD controller for converting, under the control of the microcomputer 45, characters and graphics data of information obtained from a data broadcast screen or an information server not shown to pixel data for output to the AV decoder 43.

The AV decoder 43 combines video-decoded images and characters and graphics input from the OSD controller 48 for output. 50 denotes a modem connected to the Internet network via a communication line of a communications company or a service provider for receiving data of an e-mail or a homepage through the communication line under the control of the microcomputer 45 for demodulation and output to the microcomputer 45 and for modulating transmission data, such as an e-mail, for output to the communication line. 60 denotes a mail server A, which is a mail server to be used by the digital broadcast receiver 53. The digital broadcast receiver 53 transmits and receives mails with this mail server. 62 is a mail server B, which is a mail server to be used by a counterpart terminal not shown.

The modem 50 is not restricted to a so-called modem using a telephone line, but may be any communication terminal, such as an ADSL modem using a telephone line, an ONU of FTTH using an optical fiber network, or a cable modem using a cable television line. A connecting scheme is not restricted to a dial-up connecting scheme, but may be a constant connecting scheme. 55 denotes a URL-information acquiring circuit for acquiring URL information IURL of homepages or the like developed on the above-described buffer memory 44 and transmitted via broadcast signals, causing the information to be stored in a memory not shown, and also outputting the information to the microcomputer 45.

For example, in BS digital broadcasting and the like, there is a standard on which transmission of the URL of the homepage of an advertiser is based through a bookmark service. The URL information IURL broadcasted according to the standard can be acquired by the digital broadcast receiver 53. 58 denotes a URL-identification-information memory for storing the URL identification information Uidx described in the second embodiment. From that memory, the microcomputer 45 can read the URL identification information Uidx. A plurality of URL identification information Uidx may be provided. The URL identification information Uidx may be registered by the user, or may be written in advance by the manufacture of the digital broadcast receiver 53 for shipping. Registration by the user is possible by using the OSD controller 48 to cause an OSD for registration to be displayed under the control of the microcomputer 45, thereby prompting the user to input information with the remote controller 46.

59 denotes a URL-transmission-destination-information memory in which transmission destination names registered for transmission of URL information IURL via e-mail, their mail addresses, and information indicative of whether the transmission destination is the terminal itself are stored in association with one another. Registration of the transmission destination is possible by using the OSD controller 48 to cause an OSD to be displayed under the control of the microcomputer 45, the OSD for an input of a transmission destination name and its mail address and selection as to whether the transmission destination is the terminal itself, and then by prompting the user to input information with the use of the remote controller 46. 56 denotes a folder ID memory, which is a memory for storing the folder ID described in the second embodiment.

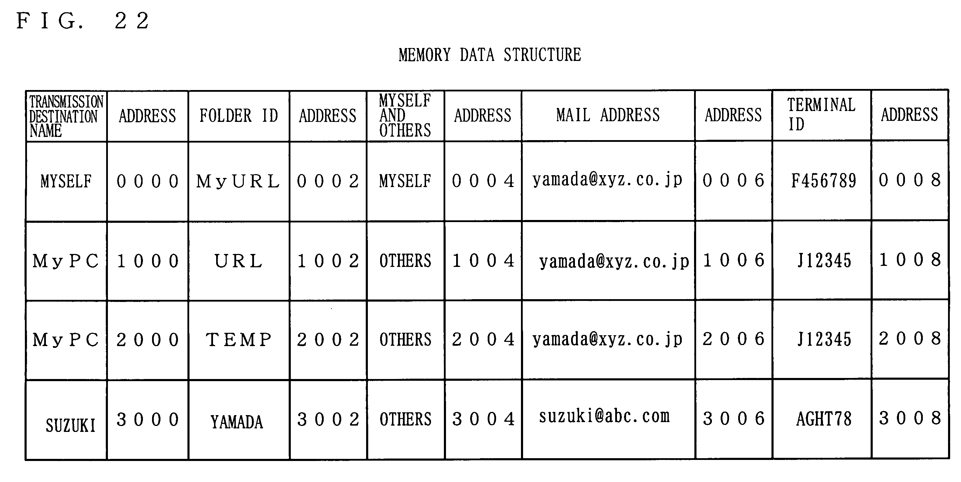

The folder ID is registered by the user in a manner similar to that for the transmission destination so as to be associated with the transmission destination. 44 is a terminal ID memory, which is a memory for storing the terminal ID described in the second embodiment. The terminal ID is registered by the user in a manner similar to that for the transmission destination so as to be associated with the transmission destinations. Here, the folder ID and the terminal ID are a folder ID and a terminal ID of the transmission destination, and is provided in advance from the transmission destination. Here, association of each piece of data is described by using FIG. 22. FIG. 22 is an illustration showing a data structure according to the second embodiment of the present invention.

In FIG. 22, data of transmission destination name, folder ID, information as to whether the terminal is the terminal itself, mail address, and terminal ID are associated with one another in areas of the same memory. In FIG. 22, four transmission destinations are registered. As for a transmission destination with its transmission destination name of "myself", information as to whether the terminal is the terminal itself indicates that the terminal is the terminal itself, and is associated with the mail address and the terminal ID of the terminal itself. As for a transmission destination with its transmission destination name of "MyPC", its mail address is identical to that of the terminal itself, and therefore the terminal is owned by the same user, but the information as to whether the terminal is the terminal itself indicates that the terminal is another terminal. Therefore, the terminal ID is different from that of the terminal itself, and it is evident that the terminal is another terminal.

Furthermore, the transmission destination of "MyPC" has registered therein two folder IDs, URL and TEMP**.** The transmission destination of Suzuki has a mail address and a terminal ID that are different from those of the terminal itself, and therefore it is evident that that transmission destination is another terminal. Association is performed with data identification using lower four bits of an address (in hexadecimal notation in the table) and transmission-destination-name identification by using upper four bits. In FIG. 21, 57 is a bookmark memory, which is a memory for storing a homepage of the URL information IURL acquired by the URL-information acquiring circuit 5 5 as bookmarking for later viewing.

In the present embodiment, the digital television broadcast receiver is described. Alternatively, an analog television receiver will suffice.

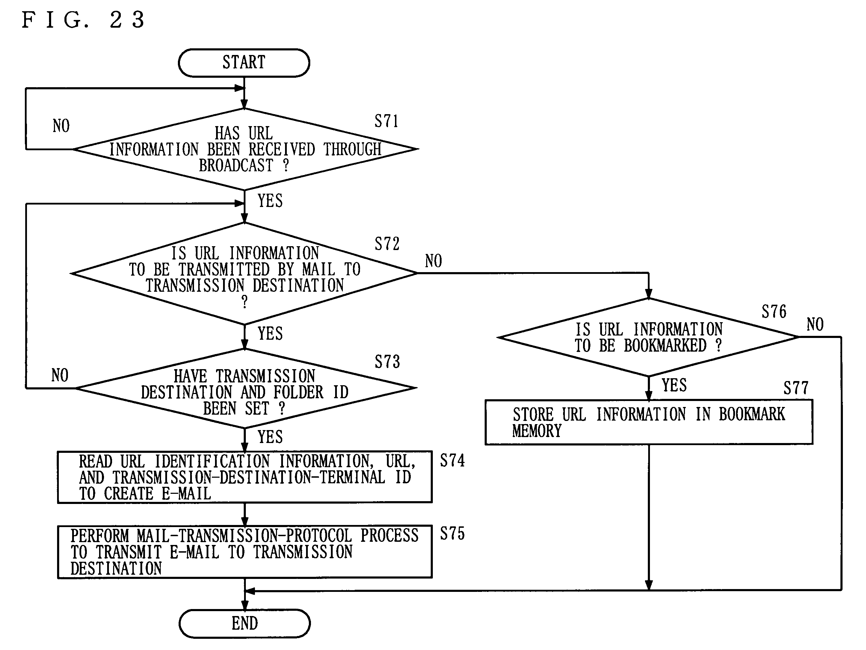

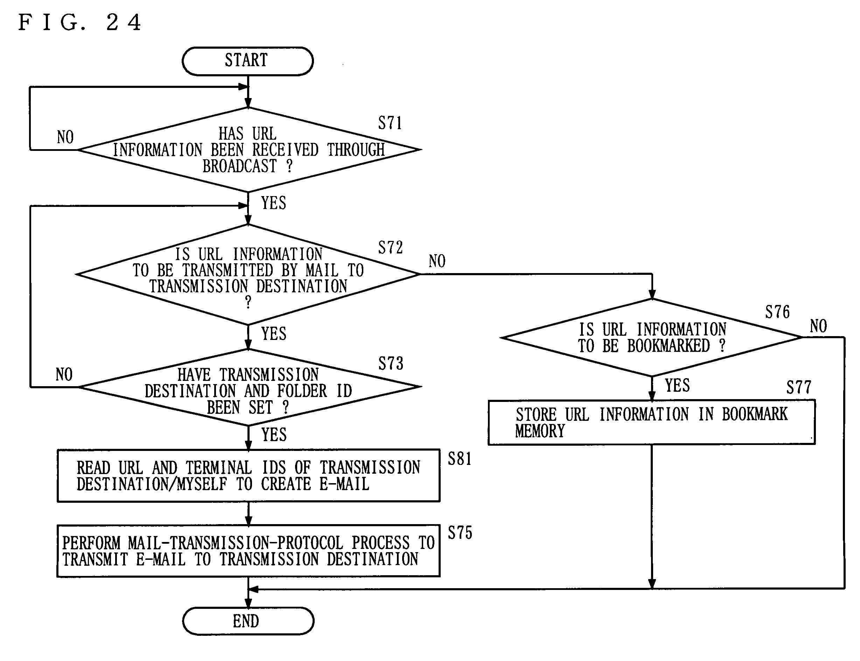

Next, an operation of transmitting an e-mail with the URL information IURL is described by using FIGS. 23 and 24. FIGS. 23 and 24 are operation flowcharts according to the second embodiment of the present embodiment.

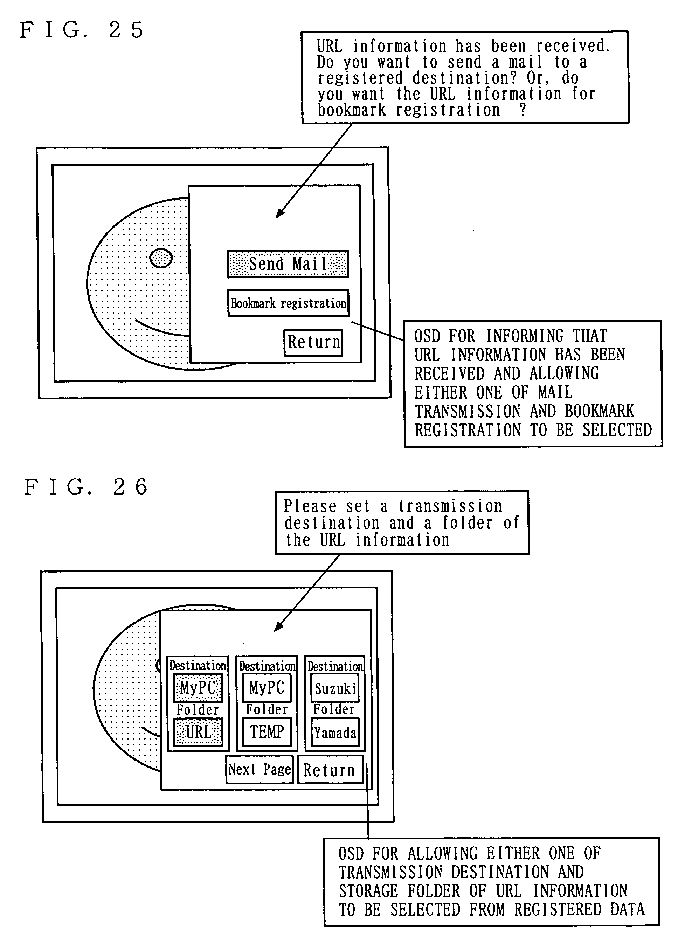

In FIGS. 23 and 24, when the URL information IURL is received through broadcasting and acquired by the URL-information acquiring circuit 55 (step S71), the microcomputer 45 causes an OSD to be displayed for confirming whether to transmit the URL information IURL acquired by controlling the OSD controller 48 to a transmission destination registered in the URL-transmission-destination-information memory 59 by e-mail (step S72). An example of this OSD display is illustrated in FIG. 25.

FIG. 25 is an illustration showing a display for confirming the handling the URL information IURL according to the second embodiment of the present invention. In FIG. 25, in order to allow selection of a scheme of handling the received URL information IURL, a button for transmission to a registered transmission destination by e-mail and a button for bookmarking are displayed, thereby allowing the user to use the remote controller 46 for selection and determination. If neither operation is performed, a return button can be selected. In FIGS. 23 and 24, when the user uses the remote controller 46 to issue an instruction for transmission by e-mail, the microcomputer 45 reads the data shown in FIG. 22 and stored in the URL-transmission-destination-information memory 59 and the folder ID memory 56, and controls the OSD controller 48 to cause an OSD to be displayed for allowing selection of a transmission destination and a transmission folder. An example of this OSD is shown in FIG. 26.

FIG. 26 is an illustration showing a display for confirming transmission destinations of the URL information IURL according to the second embodiment of the present invention. In FIG. 26, buttons for allowing the registered transmission destinations and the folder ID associated therewith to be selected in pair are displayed, thereby allowing the user to use the remote controller 46 for selection and determination. If Suzuki in FIG. 22 is desired to be selected, a next-page button is selected and determined. If no button is desired to be selected, a return button is selected and determined. Although not shown, if the next-page button is selected and determined, a previous-page button is also displayed.

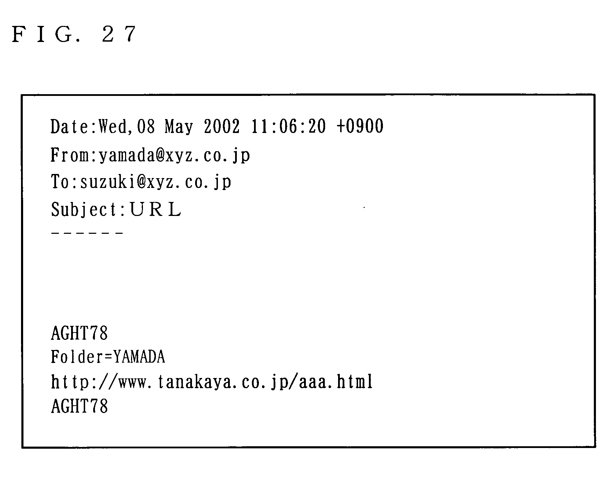

In FIGS. 23 and 24, when the user uses the remote controller 46 to select and determine a transmission destination and a transmission folder (step S73), in the example of FIG. 23, the URL is read from the memory not shown in the URL-information acquiring circuit 55 under the control of the microcomputer 45, the URL identification information Uidx is read from the URL identification information Uidx memory 58. Also, the terminal ID of the relevant transmission destination is read from the terminal ID memory 44 for creating an e-mail (step S74). An example of the e-mail created by the microcomputer 45 is shown in FIG. 27 when a transmission destination of Suzuki and a folder ID of Yamada are selected in step S73.

FIG. 27 is an illustration showing data of a transmission mail according to the third embodiment of the present invention. It is evident that Subject has written therein a character of URL, which is the URL identification information Uidx, and the body has written therein a terminal ID of Suzuki, that is, AGHT78. In this case, the URL identification information Uidx may be written not in Subject but in the body, and the terminal ID may be written in Subject. Next, in the example of FIG. 24, the URL is read from the memory not shown of the URL-information acquiring circuit 55 under the control of the microcomputer 45, and the terminal ID of the terminal destination corresponding to the terminal ID of the terminal itself is read from the terminal ID memory 44 for creating an e-mail (step S81).

Illustrated in FIG. 4 is an example of an e-mail created by the microcomputer 45 when a transmission destination of Suzuki and a folder ID of Yamada are selected in step S73. It is evident that a transmission-destination identification area of Subject (an area following To:) has written therein the terminal ID of Suzuki, that is, AGHT78 , and a sender identification area (an area following From:) has written therein the terminal ID of the terminal itself, that is, J12345. In this case, these identification areas may not be in Subject, but in the body. Next, under the control of the microcomputer 45, the modem 50 is used for performing a mail transmission protocol process for transmission to the transmission destination (in practice, transmission is made to the mail server A and then from the mail server A to the mail server B).

Also, in step S72, when the user uses the remote controller 46 to issue an instruction for bookmarking, the microcomputer 45 causes an OSD as shown in FIG. 31 to be displayed to the user for selection for confirming whether to bookmark the URL information IURL received by the OSD controller 48 (step S76). If the user selects and determines YES, the received URL information IURL is read from the memory not shown in the URL-information acquiring circuit under the control of the microcomputer 45 and is then stored in the bookmark memory 57 (step S77). If NO is selected and determined in step S76, the procedure ends. Here, in the third embodiment, description is made to the case where the URL information IURL is received from a broadcast signal. Alternatively, the URL information IURL may be received by using the modem 50 from a communication network.

As has been described in the foregoing, the information providing device according to the present invention can bookmark the URL information IURL transmitted via a broadcast signal or the like, and also can automatically create and use an e-mail with the URL being confirmed for transmission to a destination registered in advance. In this case, the receiving side can authenticate the sender and can specify a folder for storage.

Also, bookmark registration can be performed onto a location away from the terminal or on another terminal.

Also, in order to transmit an e-mail containing the URL information IURL, an operation of copying the URL described in the browser or the like and then pasting the URL on the body of the e-mail does not have to be manually performed. The operation can be performed without using a pointing device, such as a mouse for specifying a range of a character string, but with a device provided only with keys, such as a remote controller for television.

Also, the information acquiring device described in the second embodiment and the information providing device described in the second embodiment can be combined.

### INDUSTRIAL APPLICABILITY

The present invention can be used for, by way of example, a pull-type data distribution service in which user-desired information can be stored, as if the service is a push-type data distribution service.

## Claims

1. An information acquiring device comprising:
communication means which is connected to an e-mail server and
an information server on a network; e-mail reception protocol processing means for receiving an e-mail; mail receiving means which receives, from the e-mail server, an e-mail transmitted by another terminal on the network by using the e-mail reception protocol processing means and acquires data; analyzing means which analyzes the data of the acquired received mail; information reception protocol means for receiving information in the information server; browser means which acquires a definition file and contents in the information server and displays the contents in a format defined by the definition ile; a location memory which stores information about locations on the network that are used for the browser means to acquire the definition file and the contents; and control means for control such that, when the location information is present in the data of the received mail acquired through the analysis of the analyzing means, the recognized location information is stored in the location memory.

2. The information acquiring device according to claim 1, wherein
the protocol for receiving the e-mail includes POP (Post Office Protocol), the protocol for receiving the information includes HTTP (Hypertext Transfer Protocol), the location information is a URL (Uniform Resource Locator), and the analysis of the analyzing means is to detect the URL.

3. The information acquiring device according to claim 3, wherein
in a method of detecting the URL in the analyzing means, a predetermined specific character string is detected.

4. The information acquiring device according to claim 3, wherein
the predetermined specific character string detected is a character string of http://.

5. The information acquiring device according to claim 3 or claim 4, comprising an ID memory that stores user identification information, wherein the predetermined specific character string is user identification information for authenticating a mail sender, and the analyzing means authenticates a mail sender with a match of the user identification information.

6. The information acquiring device according to claim 5, further comprising control means which performs control so as to allow the location information to be stored.

7. The information acquiring device according to claim 1, comprising: instruction accepting means which accepts an externally-provided instruction; a title memory which stores title information indicative of a title of contents associated with the location information; title displayingmeans that displays the title information stored in the title memory as a list; and control means which causes the location information of the contents and the title information registered by the user using the instruction accepting means to be stored in association with each other in the location memory and the title memory, acquires, when the location information is detected in the received mail, a definition file in an information server on the Internet indicated by the location information in the mail to extract a title of the contents from the definition file and handle the extracted title as the title information, performs control so that the location information in the received mail and the extracted title information are stored in association with each other, performs control when the user uses the instruction accepting means to issue an instruction for displaying a list of the title information so that the list of the title information is displayed by using the title displaying means, and performs control when the user uses the instruction accepting means to issue an instruction for selecting a title in order to acquire contents so that the contents are acquired and displayed based on an associated location information.

8. The information acquiring device according to claim 7, wherein
the definition file is an HTML file, the protocol for receiving the e-mail includes POP, the protocol for receiving the information includes HTTP, the location information is a URL, the analysis of the analyzing means detects the URL.

9. The information acquiring device according to claim 8, wherein
in a scheme of detecting the URL in the analyzing means, a predetermined specific character string is detected.

10. The information acquiring device according to claim 9, wherein
the predetermined specific character string detected is a character string of http://.

11. The information acquiring device according to claim 10, comprising a falder memory which stores falder identification information, wherein the predetermined specific character string includes a character string indicative of folder identification information for specifying a storage folder in the list of the title information, the analyzing means detects the folder identification information, the title information is stored in association with the storage folder indicated by the folder identification information, and, when the user uses the instruction accepting means to issue an instruction for displaying the list of the title information, control is performed so that the title display means is used to display the title information in the associated storage folder.

12. The information acquiring device according to claim 9 or claim 10, comprising an ID memory for storing user identification information, wherein the predetermined specific character string is user identification information for authenticating a mail sender, and the analyzing means authenticates a mail sender with a match of the user identification information.

13. The information acquiring device according to claim 12, comprising control means which controls the storage of the location information according to the authentication results so that the storage is enable.

14. The information acquiring device according to claim 1 or claim 7, comprising: means which displays an OSD (On Screen Display) including a button which can be pressed by the instruction accepting means; and control means which causes the location information in the data of the acquired received mail to be displayed on the OSD as a button and detects that the button pressed by the instruction accepting means is the location information selected by the user.

15. The information acquiring device according to claim 3 or claim 4, comprising an ID memory which stores user identification information, wherein the predetermined specific character string is user identification information for checking a mail sender and, prior to e-mail reception, the analyzing means checks the mail sender with a match of the user identification information.

16. The information acquiring device according to claim 15, comprising control means which performs control so as to allow reception of an e-mail according to the check results.

17. The information acquiring device according to claim 10, comprising an ID memory for storing user identification information, wherein the predetermined specific character string includes user identification information for checking a mail sender and, prior to e-mail reception, the analyzing means checks the mail sender with a match of the user identification information.

18. The information acquiring device according to claim 17, comprising control means which performs control so as to allow reception of an e-mail according to the check results.

19. An information providing device comprising: communication means which is connected to an e-mail server on a network; e-mail transmission-protocol processing means for transmitting an e-mail; URL information acquiring means which receives and acquires URL information transmitted as being superposed on a broadcast signal; a URL transmission-destination memory that stores an e-mail transmission-destination address where the URL information is stored; and control means which creates, upon reception of the URL information, e-mail data containing the URL information acquired by the URL information acquiring means with an address stored in the URL-transmission-destination-memory being taken as a transmission destination, for transmission to an electronic mail server on the network by using the e-mail transmission-protocol processing means and the communication means.

20. The information providing device according to claim 19, wherein the communication means is also connected to an information server on the network, and the information providing device comprises: information reception protocol means for receiving information in the information server; browser means which acquires a definition file and contents in the information server to causes the contents to be displayed; a location memory having stored therein URL information, which is location information on the network used for the browser means to acquires the contents; and control means which selects, as to a handling of the URL information acquired by the URL information acquiring means, either one of 1) creating e-mail data containing the URL information for transmission to an e-mail sever on the network by using the e-mail transmission-protocol processing means and the communicating means and 2) storing the URL information in the location memory.

21. The information providing device according to any one of claims 19 to 20, comprising: a URL identification information memorywhich stores URL identification information for identifying that the e-mail contains the URL information; and control means which creates e-mail data containing the URL information acquired by the URL information acquiring means and the URL identification information.

22. The information providing device according to any one of claims 19 to 21, comprising: an ID memory which stores user identification information; and control means which creates e-mail data containing the URL information acquired by the URL information acquiring means and the user identification information.

23. The information providing device according to any one of claims 19 to 21, comprising: a faldermemorywhich stores falder identification information of a transmission destination; and control means which creates e-mail data containing the URL information acquired by the URL information acquiring means and the folder identification information of the transmission destination.

24. The information providing device according to any one of claims 19 to 23, comprising: instruction accepting means which accepts an externally-provided instruction; a transmission-destination name memory which stores a name of a transmission destination; transmission-destination displaying means which displays, as a list, the name stored in the transmission-destination name memory and the falder identification information of the transmission destination stored in the falder memory; control means which performs control so that a name of the transmission destination registered by the user using the instruction accepting means, the folder identification information, and the address are stored so as to be associated with one another in the transmission-destination memory, the folder memory, and the URL transmission-destination memory, performs control when the URL information acquiring means acquires URL information so that the list is displayed by using the transmission-destination displaying means, and performs control when the user uses the instruction accepting means to select and specify a transmission destination to which the received URL information is sent by e-mail so that e-mail data is created based on the associated address information and the acquired URL information.

25. The information providing device according to claim 24, comprising: means which displays an OSD (On Screen Display) including a button which can be pressed by the instruction accepting means; and control means which causes the name stored in the transmission-destination name memory and the transmission-destination's falder identification information stored in the falder memory on the OSD to be displayed on the ODS as buttons which can be simultaneously pressed and recognizes that the button pressed by the instruction accepting means is the transmission destination selected by the user.

## Amended claims

### Amended claims under Art. 19.1 PCT

1. Cancelled)

2. (Cancelled)

3. (Cancelled)

4. (Cancelled)

5. (Cancelled)

6. (Cancelled)

7. (Cancelled)

8. (Cancelled)

9. (Cancelled)

10. (Cancelled)

11. (Cancelled)

12. (Cancelled)

13. (Cancelled)

14. (Cancelled)

15. (Cancelled)

16. (Cancelled)

17. (Cancelled)

18. (Cancelled)

19. (Cancelled)

20. (Cancelled)

21. (Cancelled)

22. (Cancelled)

23. (Cancelled)

24. (Cancelled)

25. (Cancelled)

26. (Added) In an information exchanging system which is interconnected via a network (NW) to an e-mail server (112, 120) and an information server (14) having stored therein contents data (Dn) for exchanging information (Dn) including an e-mail, an information acquiring device (IS1) which acquires the contents data (Dn), comprising:
e-mail reception protocol processing means (105b) for receiving an e-mail (Dn) from the e-mail server (112, 120);
data acquiring means (111, 110, 105; S114) which acquires data (Dn) from the e-mail (Dni);
first analyzing means (105d; S116) which analyzes the acquired data (Dn) to detect location information (IURL) indicative of an address of the contents data on the network (NW); and
a location information memory (132; S118) storing the detected location information (IURL), wherein
the first analyzing means (105d; S115) detects, in the acquired data (Dn), a character string following a predetermined character string as a URL, the e-mail reception protocol processing means (105b) includes POP (Post Office Protocol), and the location information (IURL) is a URL (Uniform Resource Locator).

27. (Added) The information acquiring device (IS1) according to claim 26, wherein
the predetermined character string is http://.

28. (Added) In an information exchanging system which is interconnected via a network (NW) to an e-mail server (112, 120) and an information server (14) having stored therein contents data (Dn) for exchanging information (Dn) including an e-mail, an information acquiring device (IS1) which acquires the contents data (Dn), comprising:
e-mail reception protocol processing means (105b) for receiving an e-mail (Dn) from the e-mail server (112, 120);
data acquiring means (111, 110, 105; S114) which acquires data (Dn) from the e-mail (Dni);
first analyzing means (105d; S116) which analyzes the acquired data (Dn) to detect location information (IURL) indicative of an address of the contents data on the network (NW);
a location information memory (132; S118) storing the detected location information (IURL);
an ID memory (105, 104, 121) which stores user identification information (IR, Tid) indicative of at least a user itself;
second analyzing means (105d; S116) which analyzes the acquired data (Dn) to detect user identification information (Tid) indicative of a sender of the e-mail (Dni); and
mail sender authenticating means (S162, S163) which authenticates the sender of the e-mail when the detected user identification information (IR, Tid) coincides with the user identification information (Tid) stored in the ID memory (105, 104, 121).

29. (Added) The information acquiring device (IS1) according to claim 28, wherein
when the e-mail sender is authenticated, the location information memory (132; S118) stores the detected location information (IURL).

30. (Added) The information acquiring device (IS1) according to claim 29, comprising e-mail reception control means (S164, S165) which enables or disables reception of the e-mail according to the authentication results.

31. (Added) The information acquiring device (IS1) according to claim 30, wherein
when the detected user identification information (Tid) is different from the user identification information (Tid) of the user itself, the e-mail reception control means (S164) enables reception of the e-mail (Dni).

32. (Added) The information acquiring device (IS1) according to claim 30, wherein
the user identification information (IR) is a mail address and a terminal ID (Tid), and when the detected mail address and terminal ID (Tid) coincide with the mail address and the terminal ID (Tid) of the user itself, the e-mail reception control means (S165) disables reception of the e-mail (Dni).

33. (Added) In an information exchanging system which is interconnected via a network (NW) to an e-mail server (112, 120) and an information server (14) having stored therein contents data (Dn) for exchanging information (Dn) including an e-mail, an information acquiring device (IS1) which acquires the contents data (Dn), comprising:
e-mail reception protocol processing means (105b) for receiving an e-mail (Dn) from the e-mail server (112, 120);
data acquiring means (111, 110, 105; S114) which acquires data (Dn) from the e-mail (Dni);
first analyzing means (105d; S116) which analyzes the acquired data (Dn) to detect location information (IURL) indicative of an address of the contents data on the network (NW); and
a location information memory (132; S118) storing the detected location information (IURL);
instruction accepting means (106, 107) which accepts an externally-provided instruction;
a title memory (133) which stores title information indicative of a title of contents associated with the location information (IURL); and
title display means (108, 203) which displays the title information stored in the title memory (133) as a list, wherein
location information (URL) of contents and title information registered by a user using the instruction accepting means (106, 107) are stored in the location information memory (132) and the title memory (13) in association with each other.

34. (Added) The information acquiring device (IS1) according to claim 33, wherein
title information is extracted from a definition file acquired from the information server (14) indicated by the location information (IURL) detected from the e-mail, and control is performed so that the location information (UR1) and the extracted title information are stored so as to be associated with each other,
when the user uses the instruction accepting means (106, 107) to issue an instruction for displaying a list of the title information, the title display means (108, 203) is caused to display the list of the title information, and
the information acquiring device further includes control means which performs control so that, when the user uses the instruction accepting means (106, 107) to issue an instruction for selecting a title in order to acquire contents, the contents are acquired based on location information (IURL) associated therewith.

35. (Added) The information acquiring device according to claim 34, wherein
the definition file is an HTML file.

36. (Added) The information acquiring device (IS1) according to claim 34, further comprising:
a folder memory (15) which stores folder identification information (C2); and
third detecting means (105d; S126) which analyzes the acquired data (Dn) to detect folder identification information indicative of a storage destination of the e-mail (Dni), wherein
the title information is stored in association with the storage folder indicated by the folder identification information, and when the user uses the instruction accepting means to issue an instruction for displaying the list of the title information, the title display means is used to display the title information in the associated storage folder.

37. (Added) In an information exchanging system which is interconnected via a network (NW) to an e-mail server (112, 120) and an information server (14) having stored therein contents data (Dn) for exchanging information (Dn) including an e-mail, an information acquiring device (IS1) which acquires the contents data (Dn), comprising:
e-mail reception protocol processing means (105b) for receiving an e-mail (Dn) from the e-mail server (112, 120);
data acquiring means (111, 110, 105; S114) which acquires data (Dn) from the e-mail (Dni);
first analyzing means (105d; S116) which analyzes the acquired data (Dn) to detect location information (IURL) indicative of an address of the contents data on the network (NW); and
a location information memory (132; S118) storing the detected location information (IURL);
means which displays an OSD (On Screen Display) including a button which can be pressed through instruction accepting means; and
control means which causes the location information (IURL) to be displayed as a button on the OSD and detects the button pressed through the instruction accepting means as location information selected by a user.

38. (Added) In an information exchanging system which is interconnected via a network (NW) to an e-mail server (112, 120) and an information server (14) having stored therein contents data (Dn) for exchanging information (Dn) including an e-mail, an information providing device (IS1) which provides address information of the contents data (Dn) on the network (NW), comprising:
e-mail transmission protocol processing means (105b) for transmitting the e-mail;
URL information acquiring means (115) which receives a broadcast signal and acquires URL information (IURL) superposed on the broadcast signal;
a URL transmission-destination memory (105a) which stores an address of a transmission destination of an e-mail containing the URL information (IURL);
first e-mail creating means (105c) which creates, upon reception of the URL information (IURL), e-mail data containing the acquired URL information with the address stored in the URL transmission-destination memory (105a) as a destination address; and
control means which causes the e-mail transmission protocol processing means (105b) to transmit the created e-mail to the e-mail server (112, 120).

39. (Added) The information providing device (IS1) according to claim 38, further comprising:
information protocol means (5) for receiving information from the information server (14);
browser means (6) which acquires a definition file and contents from the information server (14) to causes the contents to be displayed in a format defined in the definition file;
a location information memory (12) which stores URL information (IURL), which is location information on the network of the information server (14), from which the browser means (6) acquires the definition file and the contents; and
control means which allows either one of creation of the e-mail data containing the acquired URL information (IURL) for transmission to the e-mail server (112, 120) and storage of the URL information (IURL) in the location information memory.

40. (Added) The information providing device (IS1) according to claim 39, further comprising:
URL identification information memory (118) which stores URL identification information (Uidx) for identifying that the e-mail contains the URL information; and
second e-mail creating means (105c) control means which causes e-mail data containing the acquired URL information (IURL) and the URL identification information (Uidx) to be created.

41. (Added) The information providing device (IS1) according to claim 40, further comprising:
an ID memory (105, 104, 121) which stores user identification information (IR, Tid) indicative of at least a user itself; and
e-mail creating means (105c) which creates e-mail data containing the acquired URL information and the user identification information (IR, Tid).

42. (Added) The information providing device (IS1) according to claim 41, further comprising:
a folder memory (15) which stores folder identification information (C11) at the transmission destination of the e-mail; and
fourth e-mail creating means (105c) which creates e-mail data containing the acquired URL information (IRUL) and the folder identification information (C12) of the transmission destination.

43. (Added) The information providing device (IS1) according to claim 38, further comprising:
instruction accepting means (106, 107) which accepts an externally-provided instruction;
a transmission-destination name memory (105a) which stores a name of a transmission destination; and
transmission-destination display means (203) which displays, as a list, a name stored in the transmission-destination name memory (105a) and the folder identification information of the transmission destination stored in the folder memory (15), wherein
a name of a transmission destination registered by a user using the instruction accepting means, the folder identification information, and the address are stored in the transmission-destination memory, the folder memory, and the URL transmission-destination memory in association with one another.

44. (Added) The information providing device (IS1) according to claim 43, wherein
when the URL information (IURL) is acquired, the transmission-destination display means (106, 107) is used to for displaying the URL information as a list, and
the information providing device further comprises control means which performs control so that, when the user uses the instruction accepting means (106, 107) to issue an instruction for selecting a transmission destination to which the received URL information (IURL) is transmitted by e-mail, e-mail data is created and transmitted based on the associated address information and the acquired URL information (IURL).

45. (Added) The information providing device (IS1) according to claim 44, further comprising:
means which displays an OSD (On Screen Display) including a button which can be pressed through the instruction accepting means; and
control means which causes the name stored in the transmission-destination name memory and the transmission-destination's folder identification information stored in the folder memory on the OSD to be displayed on the OSD as buttons which can be simultaneously pressed and
recognizes that the button pressed by the instruction accepting means is the transmission destination selected by the user.
